# EUROPEAN PATENT APPLICATION

(11) **EP 3 643 964 A1**
(43) Date of publication of application: **29.04.2020**
(21) Application number: 18821020.7
(22) Date of filing: 13.06.2018
(51) Int. Cl.: F21S 41/675, F21S 45/43, F21V 29/503, F21V 29/67, F21Y 115/10

(54) **LAMP UNIT**

(30) Priority: 20.06.2017 JP 2017120058; 20.06.2017 JP 2017120059; 04.07.2017 JP 2017130760; 20.07.2017 JP 2017140428
(71) Applicant: Koito Manufacturing Co., Ltd., Tokyo 108-8711 (JP)
(72) Inventor: TAKII, Naoki, Shizuoka-shi Shizuoka 424-8764 (JP); FUSHIMI, Yoshiaki, Shizuoka-shi Shizuoka 424-8764 (JP); ICHIKAWA, Tomoyuki, Shizuoka-shi Shizuoka 424-8764 (JP)
(74) Representative: Hoffmann Eitle
(86) International application number: PCT/JP2018/022546
(87) International publication number: WO 2018/235691

(57) **Abstract**

Provided is a lamp unit (LU1) equipped with: a rotary reflector (22) which, while rotating, reflects light emitted from a light source to scan in a prescribed direction; and a motor (21) for rotary-driving the rotary reflector (22), wherein the rotary reflector (22) (light reflecting blades (221), boss (222)) and a rotor (25) (rotor yoke (252)) of the motor (21) are formed integrally. This configuration enables improving workability in mounting the rotary reflector (22) and the rotor (25) to a rotary shaft (211).

## Description

### TECHNICAL FIELD

The present disclosure relates to a lamp unit configured to reflect light from a light source by a rotary reflector and to scan the reflected light for illumination.

### BACKGROUND ART

A lamp, in particular, a headlamp of a vehicle such as an automobile is known which is configured to scan light emitted from a light source toward a region ahead of the vehicle for illumination (for example, refer to Patent Literature 1). The Patent Literature 1 discloses a rotary reflector (light reflecting blade) of which a light reflecting surface is configured so that an incidence angle of light emitted from a light-emitting element is to continuously change in conjunction with rotation. Since the incidence angle of the light emitted from the light source changes in conjunction with rotation of the rotary reflector and a reflection angle of the reflected light is correspondingly changed, it is possible to irradiate the reflected light from the rotary reflector toward the front of the automobile, thereby scanning and illuminating a region ahead of the vehicle by the reflected light by.

### CITATION LIST

### PATENT LITERATURE

Patent Literature 1: JP-A-2017-59546

### SUMMARY OF INVENTION

### TECHNICAL PROBLEM

In the Patent Literature 1, a motor is used as a drive source configured to rotate the rotary reflector. As the motor, it is considered to adopt an outer rotor-type brushless motor. The outer rotor-type motor has a configuration in which a stator is disposed around a rotary shaft and a rotor mounted to the rotary shaft is disposed around the stator.

In the outer rotor-type motor, the rotor is mounted to the rotary shaft and the rotary reflector is also mounted to the rotary shaft. According to the study by the inventors, when the rotor and the rotary reflector are mounted to one end portion of the rotary shaft, the motor and the rotary reflector can be mounted to the rotary shaft from one side in an axial direction, which is advantageous to improve workability. Even in this case, however, it is necessary to respectively mount the motor and the rotary reflector to the rotary shaft, so that there is a limit to improve workability.

In the meantime, according to the technology disclosed in the Patent Literature 1, the motor is used as the drive source configured to rotate the rotary reflector. However, when the rotary reflector is coupled to one end portion of the rotary shaft of the motor, the rotary shaft may have unbalanced load along the axial direction, in some cases. Particularly, since the motor is embedded in the headlamp, together with the rotary reflector, it is preferably to make the motor as small and light as possible so as to downsize and lighten the headlamp. However, in a case of a small and light motor, an influence of a weight of the mounted rotary reflector increases and a center-of-gravity position of the rotary shaft in the axial direction is biased to the one end portion to which the rotary reflector is mounted.

When the axial bias of the center-of-gravity of the rotary shaft becomes significant, the smooth rotation of the rotary shaft is hindered. For example, the rotary shaft is subjected to precession movement. When the smooth rotation of the rotary shaft is hindered, an error occurs in the incidence angle of the light to be incident on the rotary reflector from the light source, so that it is not possible to accurately scan the light from the light source. Also, biased force is applied to a bearing configured to pivotally support the rotary shaft so as to be axially rotatable, so that durability of the motor is lowered due to uneven wear of the bearing and the like.

Also, in the Patent Literature 1, the motor is used as the drive source configured to rotate the rotary reflector. However, when a weight is imbalanced in a radial direction and in a circumferential direction of the rotary reflector coupled to the rotary shaft of the motor, a deviation may occur in a rotating speed of the rotated rotary reflector or the rotary reflector may rotate in a wavy shape (ruffling phenomenon).

When the deviation occurs in the rotating speed of the rotary reflector due to the imbalance of the weight balance of the rotary reflector, the scan speed of the light flux reflected on the rotary reflector is imbalanced, so that the uniform scan cannot be performed. Also, when the ruffling phenomenon occurs in the rotation of the rotary reflector, an error occurs in the incidence angle of the light to be incident on the rotary reflector from the light source, so that linear scan cannot be performed.

On the other hand, in the technology of the Patent Literature 1, when the rotary reflector is rotated, the light reflecting blade to rotate at high speed may be electrified with static electricity due to friction between the light reflecting blade and surrounding air and the like. For this reason, wastes and fine foreign matters may be attached to the light reflecting surface of the light reflecting blade due to the static electricity. Alternatively, the electrified static electricity is discharged between the light reflecting blade and a conductor adjacent to the rotary reflector, so that the light reflecting surface on which the discharge has occurred, for example, a part of an aluminum-deposited surface may be damaged.

When the light reflecting surface of the rotary reflector is attached with the foreign matters or damaged, the light reflecting function is deteriorated or damaged at the corresponding part, so that it is difficult to normally reflect and scan the light emitted from the light source, which lowers reliability of the lamp unit.

A first object of the present disclosure is to provide a lamp unit capable of improving mounting workability of a motor and a rotary reflector.

A second object of the present disclosure is to provide a lamp unit capable of adjusting a center-of-gravity position of a rotary shaft having a rotary reflector mounted thereto to an appropriate position, thereby realizing favorable light scan by the rotary reflector.

A third object of the present disclosure is to provide a lamp unit capable of enabling high-quality scan by correcting imbalance of weight balance of a rotary reflector, thereby.

A fourth object of the present disclosure is to provide a lamp unit capable of preventing lowering in light reflecting performance of a rotary reflector due to static electricity, thereby realizing favorable light scan.

### SUMMARY OF INVENTION

### SOLUTION TO PROBLEM

In order to achieve the first object, a lamp unit of the present disclosure includes a rotary reflector configured to reflect and scan light emitted from a light source in a predetermined direction while rotating, and a motor configured to rotate the rotary reflector, wherein the rotary reflector and a rotor of the motor are integrally formed.

The rotor may have a rotor yoke, and the rotor yoke may be formed integrally with the rotary reflector. For example, the rotary reflector and the rotor yoke may be formed by integral molding. Also, a rotary shaft of the motor may be formed integrally with the rotary reflector and the rotor yoke.

In order to achieve the second object, a lamp unit of the present disclosure includes a rotary reflector configured to reflect and scan light emitted from a light source in a predetermined direction while rotating, wherein a motor configured to rotate the rotary reflector includes a stator, a rotor mounted to a rotary shaft, and a pair of bearings spaced apart in an axial direction of the rotary shaft and configured to rotatably support the rotary shaft, wherein the rotary reflector and the rotor are mounted to one end portion of the rotary shaft, and wherein a center-of-gravity of the rotary shaft is set between the pair of bearings in an axial direction.

A balance weight may be mounted to the other end portion of the rotary shaft. Also, an extension length of the other end portion of the rotary shaft from the bearing disposed on the other end portion-side of the rotary shaft may be longer than an extension length of one end portion of the rotary shaft from the bearing disposed on one end portion-side of the rotary shaft. Alternatively, the bearing, which is disposed on one end portion-side of the rotary shaft, of the pair of bearings may be disposed closer to one end portion of the rotary shaft than the stator. Also, the balance weight may be configured by a heat radiation fan.

In order to achieve the third object, a lamp unit of the present disclosure includes a rotary reflector configured to reflect and scan light emitted from a light source in a predetermined direction while rotating, wherein the rotary reflector is provided with a weight balance adjusting means for adjusting weight balance.

The rotary reflector may include a boss to be mounted to a rotary shaft of a motor and at least one light reflecting blade provided integrally with the boss, and the weight balance adjusting means may be provided to the boss or the light reflecting blade.

The weight balance adjusting means may be configured by an asymmetrically shaped ring member to be mounted to the boss, such as an E-ring, a C-ring and the like, a concave portion formed in the light reflecting blade, a weight member such as resin being capable of being injected into the concave portion, a convex portion provided to the light reflecting blade and capable of being removed from the light reflecting blade, or a convex piece provided to the light reflecting blade and capable of being bent in a radial direction of the rotary reflector.

In order to achieve the fourth object, a lamp unit of the present disclosure includes a rotary reflector configured to reflect and scan light emitted from a light source in a predetermined direction while rotating, wherein the rotary reflector is mounted to a rotary shaft of a motor formed of a conductive member, wherein the rotary reflector is provided with a first conductive part, and wherein the first conductive part is grounded via the rotary shaft.

In order to achieve the fourth object, a lamp unit of the present disclosure includes a rotary reflector configured to reflect and scan light emitted from a light source in a predetermined direction while rotating, wherein the rotary reflector is mounted to a rotary shaft of a motor formed of a conductive member, and wherein the rotary reflector is formed of a conductive part and is grounded via the rotary shaft.

The motor may have a second grounded conductive part, and the rotary shaft of the motor may be conductive to the second conductive part.

### ADVANTAGEOUS EFFECTS OF INVENTION

According to one aspect of the present disclosure, the rotary reflector and the rotor are integrally formed, so that it is possible to improve mounting workability to the rotary shaft.

Also, according to one aspect of the present disclosure, the center-of-gravity of the rotary shaft of the motor configured to rotate the rotary reflector is set between the pair of bearings configured to pivotally support the rotary shaft in the axial direction, so that the stable rotation of the rotary shaft is secured and the light from the light source can be stably scanned by the rotary reflector.

Also, according to one aspect of the present disclosure, even when the weight balance of the rotary reflector is imbalanced, the weight balance can be adjusted to a balanced state by using the weight balance adjusting means, so it is possible to realize the high-quality scan in the lamp unit.

Also, according to one aspect of the present disclosure, the static electricity generated in the rotary reflector can be discharged to the ground via the rotary shaft of the motor, so that it is possible to prevent the lowering in reflecting performance of the rotary reflector due to the electrification of the static electricity, and to realize the stable light scan.

### BRIEF DESCRIPTION OF DRAWINGS

FIG. 1 is a perspective view depicting an outline of a lamp unit of a first embodiment.
FIG. 2 is a partially broken left side view of the lamp unit of the first embodiment.
FIG. 3 is a partially broken perspective view of a reflector unit of the first embodiment.
FIG. 4 is a longitudinal sectional view of the reflector unit of the first embodiment.
FIG. 5 is a longitudinal sectional view of a reflector unit of a first modified embodiment of the first embodiment.
FIG. 6 is a longitudinal sectional view of a reflector unit of a second modified embodiment of the first embodiment.
FIG. 7 is a longitudinal sectional view of a reflector unit of a second embodiment.
FIG. 8 is a partially broken perspective view of a reflector unit of a first modified embodiment of the second embodiment.
FIG. 9 is a perspective view depicting an outline of a lamp unit of a third embodiment.
FIG. 10 is a partially broken left side view of the lamp unit of the third embodiment.
FIG. 11 is a partially broken perspective view of a reflector unit of the third embodiment.
FIG. 12 is a longitudinal sectional view of the reflector unit of the third embodiment.
FIG. 13 is a longitudinal sectional view of a reflector unit of a fourth embodiment.
FIG. 14 is a longitudinal sectional view of a reflector unit of a fifth embodiment.
FIG. 15 is a longitudinal sectional view of a reflector unit of a sixth embodiment.
FIG. 16 is a partially broken left side view of a lamp unit of the sixth embodiment.
FIG. 17 is a perspective view depicting an outline of a lamp unit of a seventh embodiment.
FIG. 18 is a partially broken left side view of the lamp unit of the seventh embodiment.
FIG. 19 is a partially broken perspective view of a reflector unit of the seventh embodiment.
FIG. 20 is a longitudinal sectional view of the reflector unit of the seventh embodiment.
FIG. 21A is a plan view depicting a surface of a rotary reflector of the seventh embodiment.
FIG. 21B is a partially exploded perspective view of the rotary reflector of the seventh embodiment, illustrating weight balance adjustment.
FIG. 22A is a plan view depicting a surface of a rotary reflector of an eighth embodiment.
FIG. 22B is a partially exploded perspective view of the rotary reflector of the eighth embodiment, illustrating the weight balance adjustment.
FIG. 23A is a bottom view depicting a backside of a rotary reflector of a ninth embodiment.
FIG. 23B is a partial perspective view of the rotary reflector of the ninth embodiment, illustrating the weight balance adjustment.
FIG. 24A is a sectional view of a rotary reflector of a tenth embodiment.
FIG. 24B is a sectional view of the rotary reflector of the tenth embodiment, illustrating the weight balance adjustment,
FIG. 25 is a perspective view depicting an outline of a lamp unit of an eleventh embodiment.
FIG. 26 is a partially broken left side view of the lamp unit of the eleventh embodiment.
FIG. 27 is a partially broken perspective view of a reflector unit of the eleventh embodiment.
FIG. 28 is a longitudinal sectional view of the reflector unit of the eleventh embodiment.
FIG. 29 is a partially enlarged sectional view of FIG. 28.
FIG. 30A depicts a pattern example of a first conductive film of the rotary reflector.
FIG. 30B depicts a pattern example of the first conductive film of the rotary reflector.
FIG. 30C depicts a pattern example of the first conductive film of the rotary reflector.
FIG. 31 is a partially enlarged sectional view of a twelfth embodiment.
FIG. 32 is a partially enlarged sectional view of a first modified embodiment of the twelfth embodiment.

### DESCRIPTION OF EMBODIMENTS

### (First Embodiment)

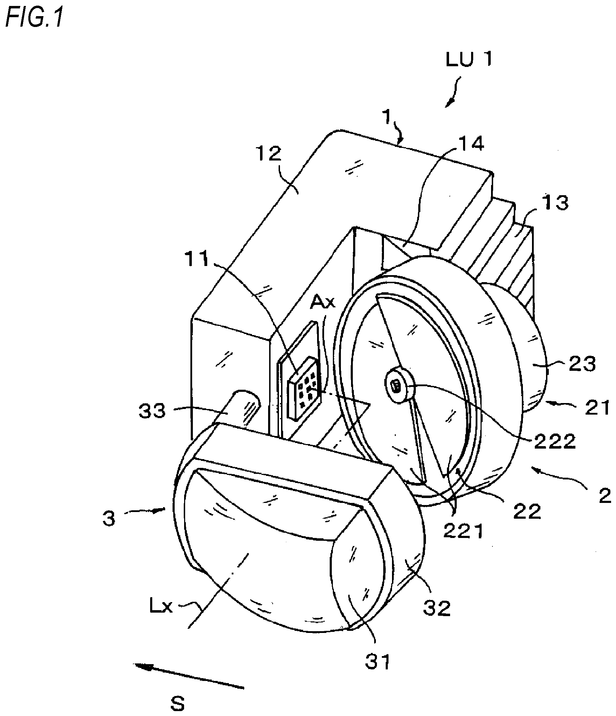

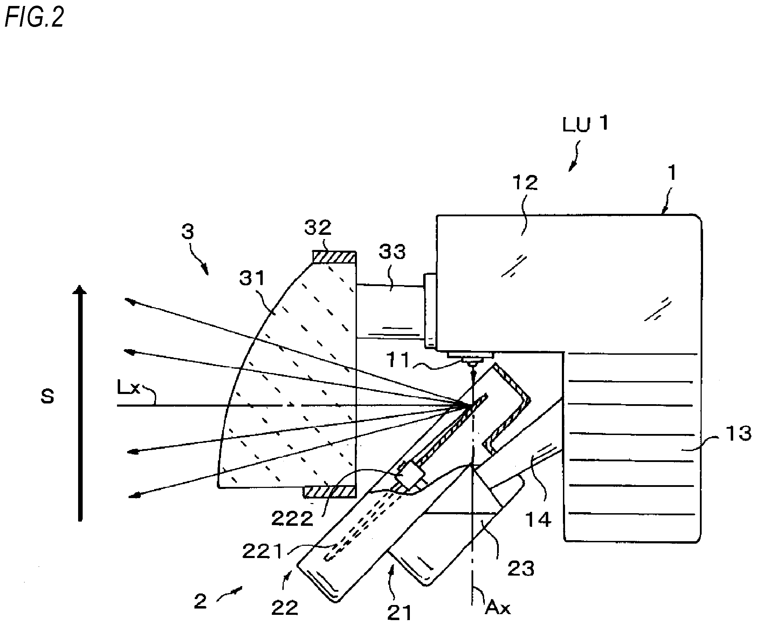

A first embodiment is described with reference to the drawings. FIG. 1 is a schematic perspective view of a lamp unit LU1 of the first embodiment configured as a lamp unit LU1 of a headlamp of an automobile. FIG. 2 is a partially broken left side view of the lamp unit LU1 shown in FIG. 1. The lamp unit LU1 is configured as a scan-type lamp unit capable of performing ADB (Adaptive Driving Beam) light distribution control, i.e., adaptively controlling an illumination region and a non-illumination region of the headlamp in correspondence to a traveling situation of an automobile, for example. The lamp unit LU1 has a light source unit 1, a reflector unit 2, and a projector lens unit 3, which are integrally configured as one unit.

The light source unit 1 of the lamp unit LU1 has a heat sink 12 having a substantial L-shape, as seen from the left. An LED (light-emitting diode) 11 as a light source is mounted on a part of an inner wall surface of the heat sink 12. A plurality of heat radiation fins 13 is formed on a part of an outer surface of the heat sink 12. The heat that is generated when the LED 11 emits light is radiated to an external space from the heat sink 12 and the heat radiation fins 13.

Although not specifically shown, the LED 11 is configured as a complex LED in which a plurality of LED chips, for example, nine LED chips are aligned in a predetermined shape. Upon light emission, each LED chip emits white light, and the white lights from each of the LED chips are emitted from the LED 11, as an integrally synthesized light flux. The nine LED chips are provided so as to meet luminosity required for the lamp unit LU1. Therefore, the more or less LED chips may also be used inasmuch as the required luminosity is met. Also, the LED 11 may be configured by discrete LEDs. Also, the LED 11 may be configured as an LED unit in which a lens for light condensing and a reflector for light condensing are integrally configured.

The reflector unit 2 is configured by a motor 21 and a rotary reflector 22 configured to be rotated by the motor 21, and is supported to the heat sink 12 by a stem 14. The rotary reflector 22 has a substantially circular plate shape where two semicircular light reflecting blades 221 (hereinbelow, abbreviated as 'blades') are arranged in a circumferential direction, and is mounted to a rotary shaft 211 of the motor 21 at a boss 22 positioned at a center thereof. Thereby, when the motor 21 is driven, the rotary reflector 22 is rotated about the rotary shaft 211. The motor 21 and the rotary reflector 22 will be described in detail later.

The projector lens unit 3 has a projector lens 31 having a shape obtained by cutting a part of a circular lens. The projector lens 31 is supported to the heat sink 12 by a lens holder 32 and a stem 33. As described later, the projector lens 31 is configured to project light reflected by the rotary reflector 22 of the reflector unit 2 toward the front of the lamp unit LU1, thereby illuminating a region ahead of the automobile. The projector lens 31 has only a part necessary for scan and removes the other parts whereby the lens is downsized and the lamp unit is downsized and lightened.

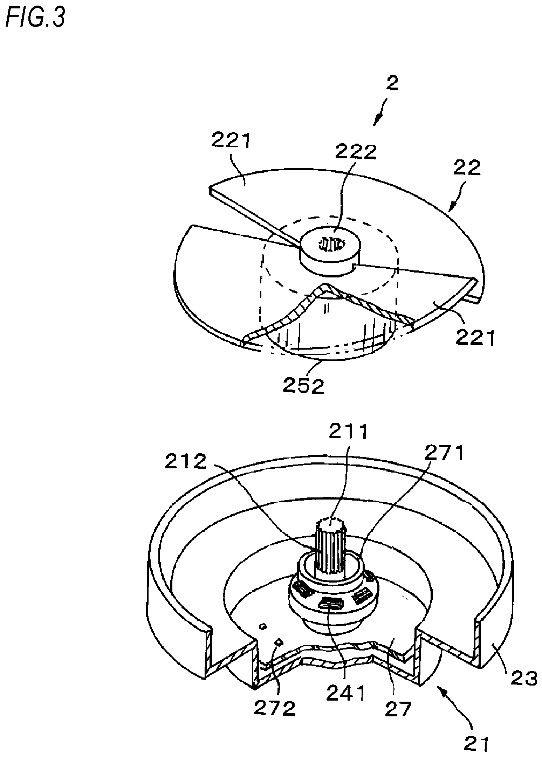

The rotary reflector 22 is described. FIG. 3 is a perspective view of the reflector unit 2, and is a partially broken exploded perspective view of a casing 23 (which will be described later). As described above, the two semicircular blades 221 are supported to the boss 222, and form a substantially circular plate shape as a whole. A surface of each blade 221 is a surface facing toward an upper side of FIG. 3 directed toward the front of the automobile. The surface of each blade 221 is configured as a light reflecting surface. In the first embodiment, the two blades 221 are formed integrally with the boss 222 by resin molding. At least the surfaces of both the blades 221 are respectively formed with a light reflecting film obtained by vapor depositing or plating an aluminum film. Gaps extending in a radial direction are respectively formed between the two blades 221 in a circumferential direction. The gaps of the two blades 221 are configured as a non-reflecting area in which light is not reflected.

The two blades 221 are point-symmetrical with respect to the boss 222. A radial inclination angle of the surface as the light reflecting surface of each of the two blades 221 is an inclination angle relative to a surface perpendicular to an axial direction of the rotary shaft 211 of the motor 21. The radial inclination angles of the surfaces of the two blades 221 are configured to continuously change in the circumferential direction of the blades 221. In the first embodiment, when seeing the blades 221 from a surface direction, the inclination angle is a negative angle inclined toward the backside on a clockwise side, and is a positive angle inclined toward the surface on a counterclockwise side. Like this, the light reflecting surface of the blade 221 is configured so that a facing angle toward the LED 11 changes along a rotating direction.

The lamp unit LU1 is disposed so that a lens optical axis Lx of the projector lens 31 shown in FIG. 2 faces in a front and rear direction of the automobile in a state in which the headlamp is installed in the automobile. Also, the LED 11 is oriented in a direction in which an emission optical axis Ax of the light flux emitted from each LED chip is substantially perpendicular to the lens optical axis Lx in a horizontal direction. As shown in FIG. 2, the reflector unit 2 is oriented in a direction in which the rotary shaft 211 of the motor 21 intersects with each of the emission optical axis Ax and the lens optical axis Lx by about 45° relative to the horizontal direction. The reflecting surface of each blade 221 of the rotary reflector 22 is formed so as to pass through the intersection of the emission optical axis Ax and the lens optical axis Lx when each blade 221 rotates.

When the LED 11 emits light, the lights emitted from the respective LED chips become one light flux, which is then projected and reflected on the surface of the blade 221 of the rotary reflector 22. The light flux reflected on the surface of the blade 221 is incident on the projector lens 31, is refracted in the projector lens 31, and is projected toward the front of the automobile, which is the front of the lamp unit LU1, thereby illuminating a region ahead of the automobile.

The blade 221 of the rotary reflector 22 is rotated by the motor 21, so that an incidence position of the light flux from the LED 11 onto the surface of the blade 221 is changed in the circumferential direction of the blade 221. As described above, since the inclination angle of the surface of the blade 221 changes in the circumferential direction of the blade 221, the incidence angle of the light flux to be incident relative to the surface of the blade 221 changes in association with the rotation of the blade 221. Thereby, a reflection angle of the light flux to be reflected on the blade 221, i.e., an angle in the horizontal direction relative to the lens optical axis Lx is changed. Therefore, the light flux passing through the projector lens 31 is deflected in the horizontal direction, and is scanned and irradiated toward the region in front of the automobile.

That is, when the light flux is emitted continuously over time from the LED 11, the light flux is scanned at high speed in the horizontal direction S, in conformity to the rotation of the rotary reflector 22, as shown in FIGS. 1 and 2. Since the scan speed is high, the light flux becomes a light distribution that illuminates the region scanned in the horizontal direction, for human eyes. Therefore, when the emission luminosity (including extinction of zero luminosity) of the LED 11 is timely controlled in synchronization with the scan, the luminosity in the horizontal direction to be scanned can be changed. For example, it is possible to implement ADB light distribution control of illuminating only a desired region and lowering or extinguish the luminosity in the other regions. Also, when the emission luminosities of the plurality of LED chips are independently timely controlled, it is possible to implement ADB light distribution control of a finer luminosity distribution.

In the rotary reflector 22, one-time scan is performed by rotation of one blade 221. Therefore, in the rotary reflector 22 of the first embodiment configured by the two blades 221, the scan is performed two times by one rotation of the rotary reflector 22. Since the gaps are formed between the two blades 221 in the circumferential direction, when the light reflection shifts from one blade 221 to the other blade 221, the light is not reflected in the gaps. For this reason, the light flux is not scanned in an opposite direction between the respective scans.

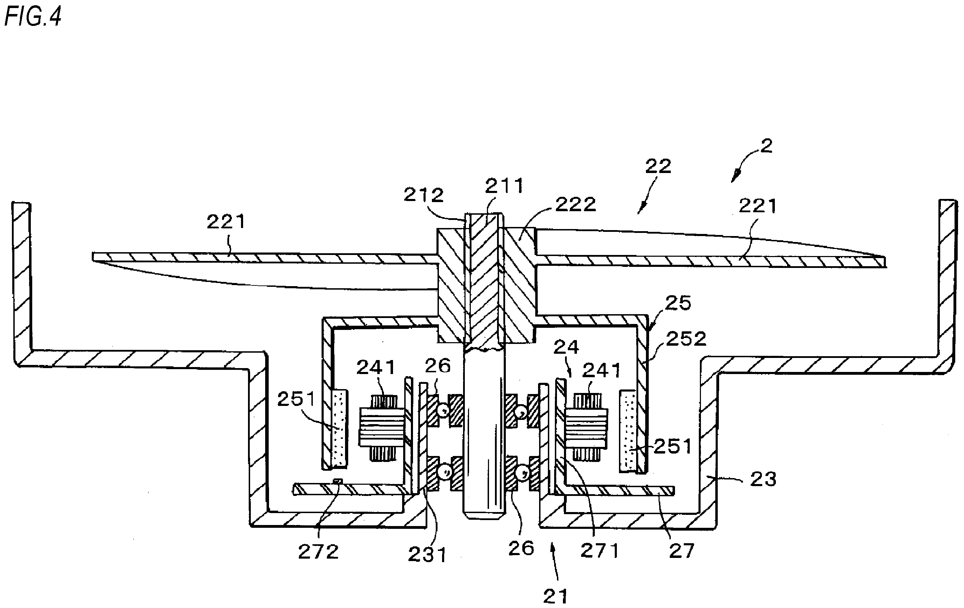

The motor 21 configured to rotate the rotary reflector 22 is described. FIG. 4 is a longitudinal sectional view of the reflector unit 2. As shown in FIGS. 4 and 3, the motor 21 is configured as an outer rotor-type brushless motor including a stator 24 having coils (windings) 241 and a rotor 25 having magnet (permanent magnets) 251 disposed around the stator 24.

The motor 21 has a casing 23 made of rigid resin. As shown in FIG. 4, the casing 23 has a circular vessel shape of which a bottom surface is recessed in two steps, and a hollow cylindrical bearing tube 231 protrudes integrally from the bottom surface of the casing 23. In the bearing tube 231, a pair of radial ball bearings (hereinbelow, referred to as 'ball bearings') 26 is spaced in a tubular axis direction. The rotary shaft 211 of the motor 21 is inserted in the bearing tube 231, and is supported to be axially rotatable in the bearing tube 231 by the pair of ball bearings 26.

In the casing 23, a circuit board 27 is disposed and supported over a necessary planar region on the bottom surface. The circuit board 27 is configured by a printed wiring board, for example. A part of the circuit board 27 is provided integrally with a tubular part 271 so as to be located on an outer diameter of the bearing tube 231. A plurality of coils 241 each of which has a conductive wire wound on a core is disposed on an outer peripheral surface of the tubular part 271. In the first embodiment, the six coils 241 are circumferentially disposed on the outer peripheral surface of the tubular part 271. Each coil 241 is electrically connected to a printed wiring (not shown) provided on the circuit board 27 so that power can be fed.

In the meantime, a rotor yoke 252 is mounted to the rotary shaft 211. The rotor yoke 252 has a short circular vessel shape so as to cover the six coils 241 configuring the stator 24. A circumferential wall of the rotor yoke 252 is disposed around outer peripheries of the coils 241. On an inner surface of the circumferential wall of the rotor yoke 252, a plurality of magnets 251 is supported with being aligned at necessary pitches in the circumferential direction of the rotor yoke 252. In the first embodiment, the magnets 251 have a circular arc plate shape, respectively, and are mounted to the rotor yoke 252 by four. The four magnets 251 are mounted to the rotor yoke 252 so that N poles and S poles of inner diameter-side surfaces facing the respective coils 241 are alternately aligned in the circumferential direction.

The circuit board 27 is provided with a power feeding circuit for feeding power to the coils 241. The power feeding circuit is configured to control three-phase signals (U, V, W), which are to be supplied to the six coils 241, in a sequence manner. Also, the power feeding circuit is mounted thereon with a plurality of (three, in the first embodiment) Hall elements 272 for detecting rotation of the rotor yoke 252 so as to obtain a timing for the sequence control. The Hall elements 272 are configured to detect changes in magnetic pole directions of the magnets 251 by using the Hall effect, thereby detecting a rotating direction and a rotating speed of the rotor yoke 252 to which the magnets 251 are supported. Since the Hall element itself is well-known, the detailed description thereof is herein omitted.

In the motor 21, the three-phase signals are supplied to the six coils 241 and an N magnetic field or S magnetic field generated by each of the coils 241 is changed over time in the circumferential direction, so that tangential drive force is generated in each magnet 251. By the drive force of each magnet 251, the rotor yoke 252 integrally provided with the magnets 251 is rotated integrally with the magnets 251. The rotation of the rotor yoke 252 axially rotates the rotary shaft 211 having the rotor yoke 252 mounted thereto, so that the motor 21 functions as the outer rotor-type motor.

Also, in the motor 21, the rotor yoke 252 is formed integrally with the rotary reflector 22. For example, the rotor yoke 252, and the blades 221 and boss 222 of the rotary reflector 22 are formed by integral resin molding. Furthermore, the magnets 251 are disposed on the inner peripheral surface of the circumferential wall of the rotor yoke 252. Although not shown herein, in a case in which the rotor yoke 252 is formed of resin, a magnetic yoke configured by a ferromagnetic cylindrical member may be disposed on the inner peripheral surface of the rotor yoke 252 and the magnets 251 may be disposed on the magnetic yoke to increase magnetic field strength to be generated by the magnets 251.

In the first embodiment, as described above, the rotor yoke 252 and rotary reflector 22 integrally formed are mounted to the boss 222 of the rotary reflector 22 with being fitted to one end portion of the rotary shaft 211 by a spline 212. Thereby, the rotor yoke 252 and rotary reflector 22 integrally formed can be mounted, as one component, to the rotary shaft 211 to configure the reflector unit 2 by one-time mounting work, so that the mounting workability can be improved.

In the lamp unit LU1 of the first embodiment, when the motor 21 is driven and the rotor yoke 252 is thus rotated, the rotary reflector 22 integrated with the rotor yoke 252 is rotated about the rotary shaft 211. The rotation of the rotary reflector 22 causes the blades 221 to rotate, thereby reflecting the light from the LED 11 to execute illumination by scan.

While assembling the motor 21, when the rotor yoke 252 is mounted to one end portion of the rotary shaft 211, as described above, the rotary reflector 22 can be mounted to the motor 21 together with the rotor yoke 252, so that the mounting of the rotary reflector 22 to the motor 21 is completed. Thereby, it is not necessary to perform the mounting operation of the rotary reflector 22 to the motor 21, as an independent operation, so that it is possible to improve the mounting workability. Also, even after the reflector unit 2 is mounted to the heat sink 12, since it is possible to mount and demount the rotary reflector 22 and the rotor yoke 252 at the same time, it is possible to easily perform maintenance for the motor 21 and the rotary reflector 22.

In the below, modified embodiments of the first embodiment are described. The configurations, which are the same as or equivalent to the first embodiment, are denoted with the same reference signs and the descriptions thereof are omitted or simplified.

### (First Modified Embodiment of First Embodiment)

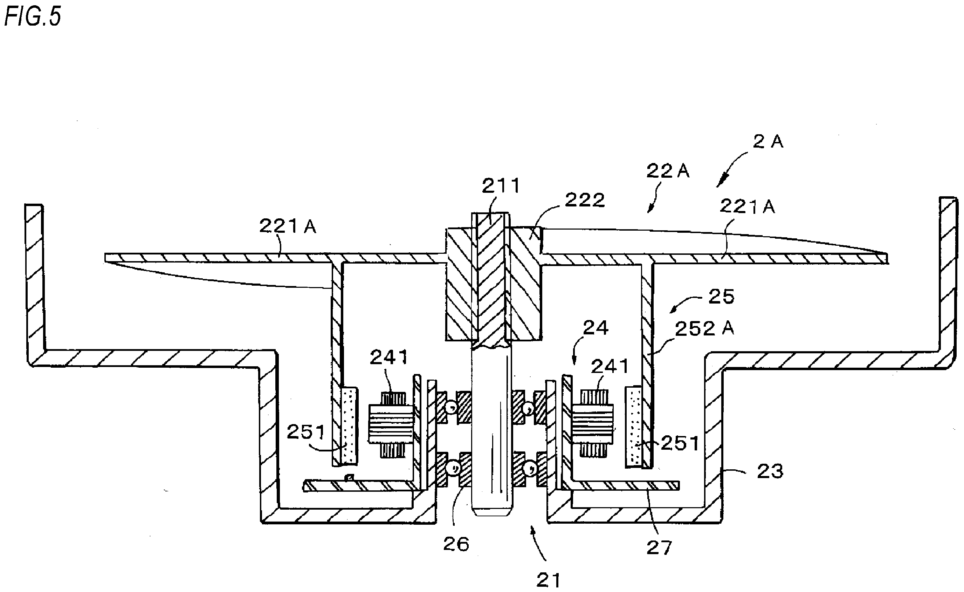

FIG. 5 is a sectional view of a reflector unit 2A of a first modified embodiment of the first embodiment. As shown in FIG. 5, a rotor yoke 252A may be formed integrally with blades 221A with being coupled to the blades 221A of a rotary reflector 22A. That is, the cylindrical rotor yoke 252A may be formed integrally on backsides of the blades 221A. Thereby, it is not necessary to provide the rotor yoke 252A with the cylindrical bottom wall, so that it is possible to simplify the structure of the rotor yoke 252A. Also, as compared to the configuration of FIG. 4, it is possible to shorten an axial dimension of the reflector unit 2A, thereby downsizing the reflector unit 2A.

### (Second Modified Embodiment of First Embodiment)

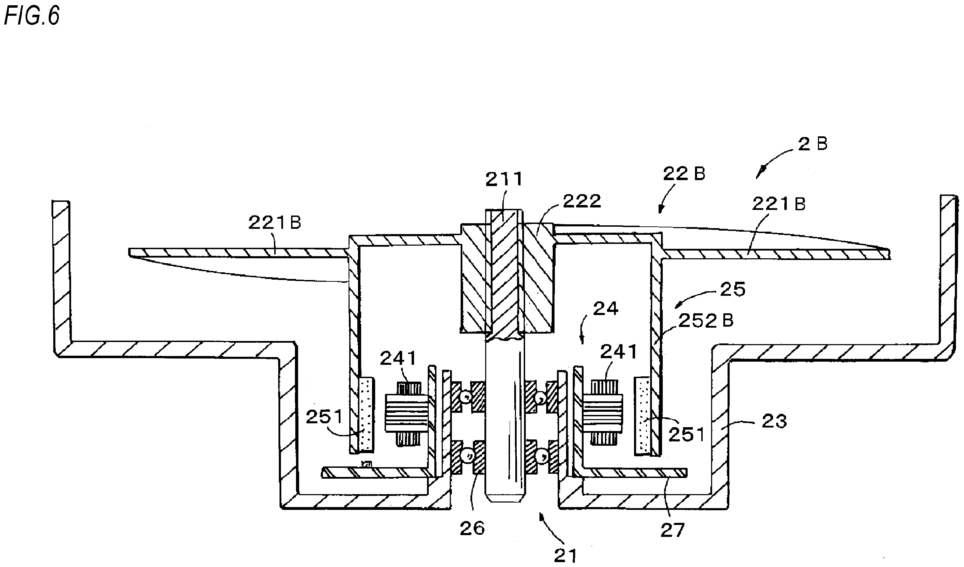

FIG. 6 is a sectional view of a reflector unit 2B of a second modified embodiment of the first embodiment. As shown in FIG. 6, blades 221B of the rotary reflector 22B extending in an outer-diameter direction may be formed integrally on an outer peripheral wall of a rotor yoke 252B. According to this configuration, since it is not necessary to provide the boss of the rotary reflector 22B and to overlap the rotor yoke 252B and the blades 221B in the axial direction of the rotary shaft 211, it is possible to further shorten an axial dimension of the reflector unit 2B, thereby downsizing the same.

### (Second Embodiment)

Subsequently, a lamp unit LU2 of a second embodiment is described. In the second embodiment, the configurations, which are similar to the first embodiment, are denoted with the same reference signs and the descriptions thereof are omitted or simplified.

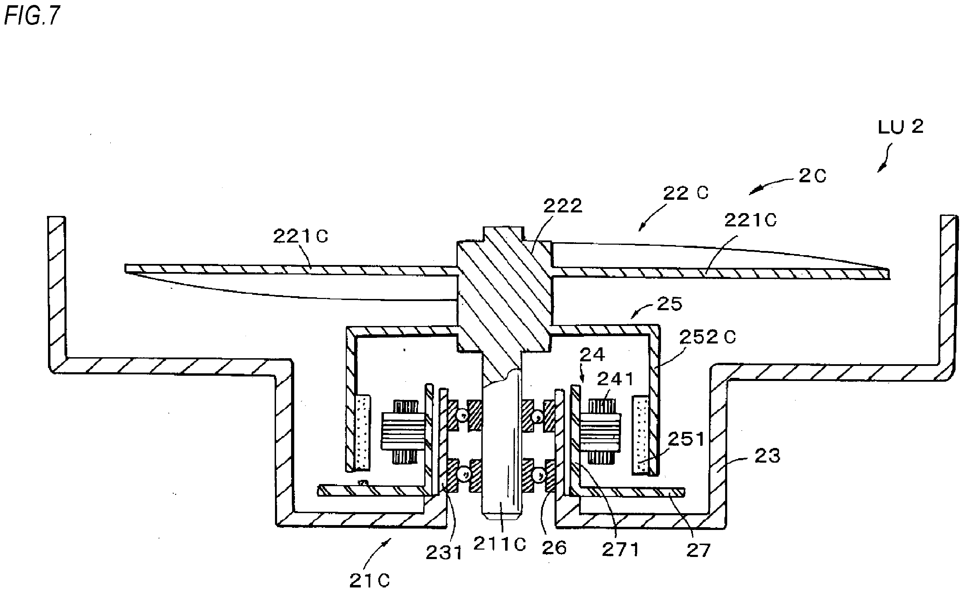

FIG. 7 is a longitudinal sectional view of a reflector unit 2C of the second embodiment. In the second embodiment, as with the first embodiment, a rotor yoke 252C of a motor 21C and a rotary reflector 22C arte integrally formed. In the second embodiment, additionally, a rotary shaft 211C of the motor 21C is formed integrally with the rotor yoke 252C and the rotary reflector 22C. In the second embodiment, the rotor yoke 252C, the rotary reflector 22C and the rotary shaft 211C are formed of rigid resin by integral molding. The other configurations are the same as those of the first embodiment.

According to the reflector unit 2C of the second embodiment, while assembling the motor 21C, when the rotary shaft 211C is mounted to the ball bearings 26, the rotor yoke 252C and the rotary reflector 22C can be correspondingly mounted at the same time. Thereby, it is possible to perform the assembling of the motor 21C and the mounting of the rotary reflector 22C at the same time, thereby further improving the mounting workability. Also, even after the reflector unit 2C is mounted to the heat sink 12, since it is possible to mount and demount the rotary reflector 22C and the rotor yoke 252C together with the rotary shaft 211C at the same time, it is possible to easily perform maintenance for the motor 21C and the rotary reflector 22C.

In the configuration of FIG. 7 of the second embodiment, for example, only the rotary shaft 211C may be formed of rigid resin, and the rotor yoke 252C and the rotary reflector 22C may be formed of resin softer than the rigid resin of the rotary shaft 211C. In this case, for example, the reflector unit 2C may be formed by two-color molding. Alternatively, the rotor yoke 252C and the rotary reflector 22C may be formed of resin, and only the rotary shaft 211C may be formed of a metal material. In this case, for example, the reflector unit 2C may be formed by insert molding.

Alternatively, in the second embodiment, the rotor yoke 252C, the rotary reflector 22C, and the rotary shaft 211C may be integrally formed of a metal material. In this case, the rotor yoke 252C, the rotary reflector 22C, and the rotary shaft 211C may be integrally formed by welding, soldering or the like.

Also in the second embodiment, as with the configuration of FIG. 5, which is the first modified embodiment of the first embodiment, the rotor yoke 252C may be formed integrally on backsides of blades 221C of the rotary reflector 22C. Alternatively, as with the configuration of FIG. 6, the blades 221C of the rotary reflector 22C may be formed integrally on an outer peripheral wall of the rotor yoke 252C. In any case, the rotary shaft 211C may be formed together with the rotor yoke 252C and the rotary reflector 22C by integral resin molding, two-color molding or insert molding.

### (First Modified Embodiment of Second Embodiment)

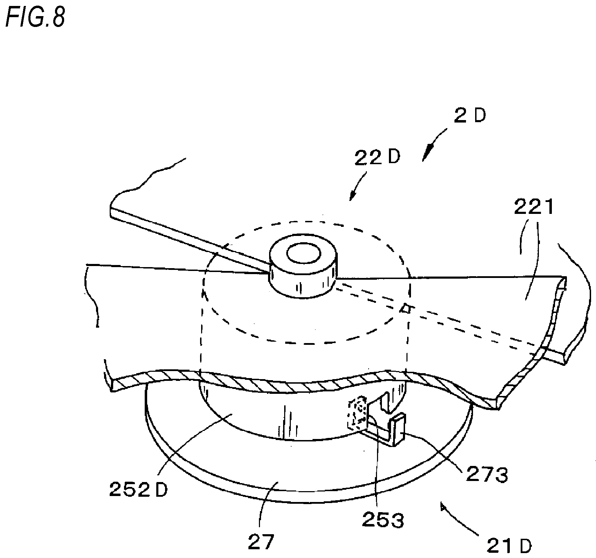

A first modified embodiment of the second embodiment is described with reference to FIG. 8. In the lamp unit LU2 of the present disclosure, when integrally molding at least a rotor yoke 252D and a rotary reflector 22D, a position detection slit 253 may be formed in a part of the rotor yoke 252D, as shown in FIG. 8. That is, the position detection slit 253 is formed by cutting a circumferential part of an outer peripheral wall of the rotor yoke 252D. In the meantime, the circuit board 27 is disposed thereon with a photo interrupter 273 in such an aspect of sandwiching the outer peripheral wall of the rotor yoke 252D in the radial direction.

According to the configuration of FIG. 8, in a case in which a motor 21D is driven and the rotor yoke 252D is thus rotated, when the position detection slit 253 traverses the photo interrupter 273, an electric signal that is output from the photo interrupter 273 changes. By detecting the electric signal, it is possible to detect a rotating speed of the rotor yoke 252D, i.e., a rotating speed of the motor 21D. Therefore, the photo interrupter 273 can be replaced with the Hall element 272 of the first embodiment. Also, when a plurality of the photo interrupters 273 is disposed, it is also possible to detect a rotating direction of the rotor yoke 252D and a rotational position of the rotor yoke 252D.

Since the rotor yoke 252D is formed integrally with the rotary reflector 22D, a circumferential position of the position detection slit 253 formed at the rotor yoke 252D can be determined with respect to the rotary reflector 22D, i.e., with respect to the blades 221 with high accuracy. Therefore, the rotational position of the motor 21D to be detected by the photo interrupter 273, i.e., the rotational position of the rotary reflector 22D can be detected with high accuracy.

The present disclosure is not limited to the brushless motor of the first embodiment and the second embodiment. For example, also in a DC motor with a brush, the rotor and the rotary reflector can be integrally formed. Also, the motor of the present disclosure can be applied to an inner rotor-type motor. For example, an inner rotor-type motor in which the rotor and rotary reflector and the rotary shaft are integrally formed can also be adopted.

### (Third Embodiment)

Subsequently, a third embodiment is described with reference to the drawings. In the third embodiment, the configurations, which are equivalent to the first embodiment, are denoted with the same reference signs or the 1000s corresponding signs and the overlapping descriptions thereof are omitted.

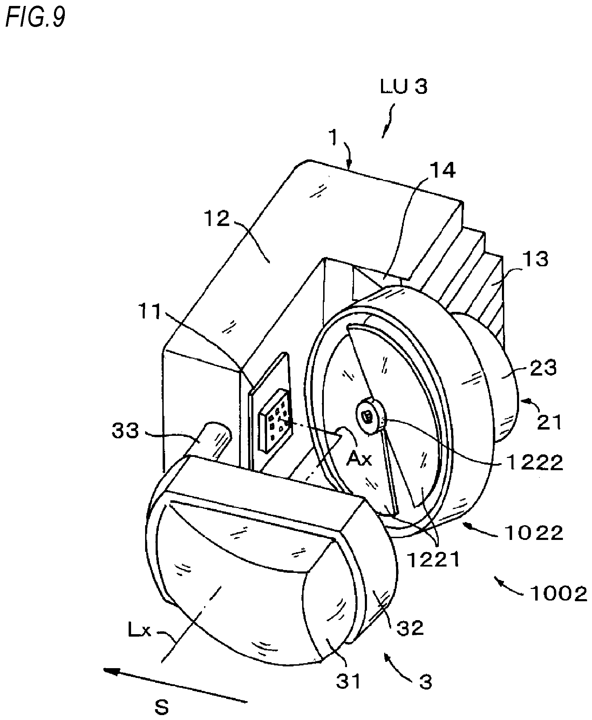

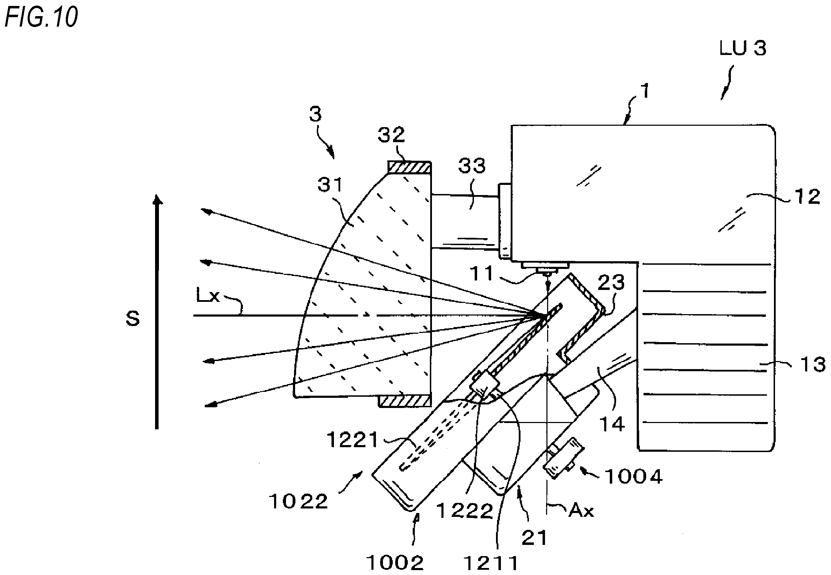

FIG. 9 is a perspective view depicting an outline of the third embodiment configured as a lamp unit LU3 of a headlamp of an automobile. FIG. 10 is a partially broken left side view of the lamp unit LU3 of FIG. 9. As with the lamp unit LU1 of the first embodiment, the lamp unit LU3 is configured as the lamp unit for ADB light distribution control, for example. The lamp unit LU3 has the light source unit 1, a reflector unit 1002, and the projector lens unit 3, which are integrally configured as one unit.

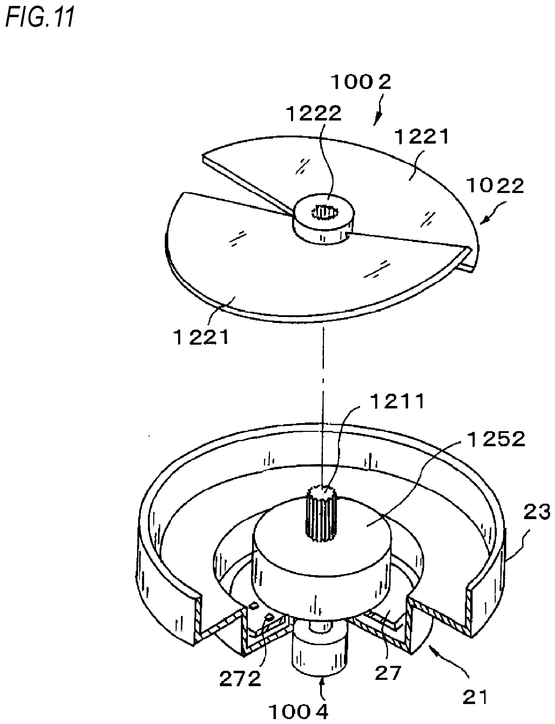

FIG. 11 is a perspective view of the reflector unit 1002, and is a partially broken exploded perspective view of the casing 23. The configuration of the reflector unit 1002 is similar to the reflector unit 2 of the first embodiment.

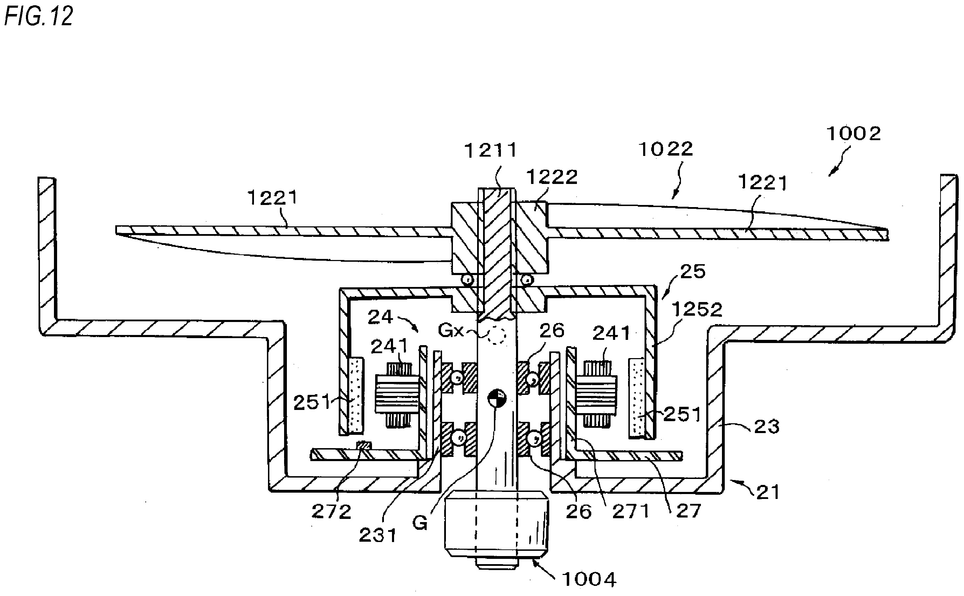

FIG. 12 is a longitudinal sectional view of the reflector unit 1002. The configuration of the motor 21 for rotating the rotary reflector 1022 is similar to the motor 21 of the first embodiment.

A rotor yoke 1252 is mounted to a rotary shaft 1211. The rotor yoke 1252 has a short cylindrical vessel shape so as to cover the six coils 241 configuring the stator 24. In the third embodiment, the rotor yoke 1252 is formed of a ferromagnetic material. Also, the rotor yoke 1252 of the third embodiment is integrally supported at a center of the bottom wall of the circular casing 23 to the rotary shaft 1211 in the rotating direction by spline fitting or the like. As with the first embodiment, a circumferential wall of the rotor yoke 1252 is disposed around the outer periphery of the coils 241. The four magnets 251 disposed and supported on the inner surface of the circumferential wall of the rotor yoke 1252 are also similar to the magnets 251 of the first embodiment.

A boss 1222 of the rotary reflector 1022 is integrally mounted to the rotary shaft 1211 with being fitted to one end portion of the rotary shaft 1211, herein, an end portion of a side on which the rotor yoke 1252 is mounted. Thereby, when the motor 21 is driven and the rotary shaft 1211 is thus rotated, the rotary reflector1022 is rotated, so that the rotation of blades 1221 associated with the rotation enables the reflection of the light from the LED 11 and the illumination by scan.

Like this, in the third embodiment, the rotary reflector 1022 and the rotor yoke 1252 are respectively mounted to one end portion of the rotary shaft 1211 of the motor 21. Thereby, when assembling the reflector unit 1002, the circuit board 27 is mounted to the casing 23 having the rotary shaft 1211 pivotally supported thereto, so that the stator 24 is configured. Thereafter, the rotor yoke 1252 is mounted to the rotary shaft 1211 and the rotary reflector 1022 is additionally mounted to the rotary shaft 1211, which operations can be performed from one side of the casing 23. Therefore, it is possible to easily assemble the motor 21 and the rotary reflector 1022. Also, after mounting the reflector unit 1002 to the heat sink 12, it is possible to easily perform maintenance for the motor 21 and the rotary reflector 1022.

In the configuration in which both the rotor yoke 1252 and the rotary reflector 1022 are mounted to one end portion of the rotary shaft 1211, a center-of-gravity position Gx of the rotary shaft 1211 is biased toward one end portion and thus largely deviates from the pair of ball bearings 26. For example, as shown in FIG. 12, in the configuration in which both the rotor yoke 1252 and the rotary reflector 1022 are mounted to one end portion of the rotary shaft 1211, the center-of-gravity position Gx of the rotary shaft 1211 is located in a position biased toward one end portion (the upward direction in FIG. 12) from between the pair of ball bearings 26. In this state, when the rotary shaft 1211 is rotated, the rotary shaft 1211 may be subjected to precession movement. When the rotation of the rotary reflector 1022 is fluctuated by the precession movement, the light from the LED 11 may not be favorably scanned.

For this reason, in the third embodiment, a balance weight 1004 is mounted to the other end portion of the rotary shaft 1211. As shown in FIG. 12, the balance weight 1004 is mounted to an end portion of the rotary shaft 1211, which is opposite to the rotor yoke 1252 and the rotary reflector 1022 with the casing 23 being interposed therebetween. The balance weight 1004 has a circular column shape, and is configured to have a weight comparable to a weight of the rotary reflector 1022 or a weight close to a summed weight of the rotary reflector 1022 and the rotor yoke 1252. The balance weight 1004 is mounted, so that the center-of-gravity position G of the rotary shaft 1211 is set to a position between the pair of ball bearings 26 in the axial direction, as shown in FIG. 12. The center-of-gravity position G of the rotary shaft 1211 is preferably set to an intermediate position between the pair of ball bearings 26 in the axial direction.

In this way, the balance weight 1004 is provided to set the center-of-gravity position G to the position between the pair of ball bearings 26 in the axial direction, so that, when the motor 21 is driven and the rotary shaft 1211 is thus axially rotated, the precession movement of the rotary shaft 1211 is suppressed. Therefore, the rotary reflector 1022, particularly, the two blades 1221 mounted to one end portion of the rotary shaft 1211 are stably rotated without fluctuation of the center of rotation, so that the light from the LED 11 is stably reflected to perform the favorable scan.

### (Fourth Embodiment)

Subsequently, a lamp unit LU4 of a fourth embodiment is described. In the fourth embodiment, the configurations, which are similar to the first or third embodiment, are denoted with the same reference signs or the 1000s corresponding signs and the overlapping descriptions thereof are omitted.

In the third embodiment, the balance weight 1004 is mounted to the other end portion of the rotary shaft 1211 to set the center-of-gravity position of the rotary shaft 1211 between the pair of ball bearings 26 in the axial direction. However, the balance weight is not necessarily required if the center-of-gravity position can be located between the pair of ball bearings 26 in the axial direction by other method.

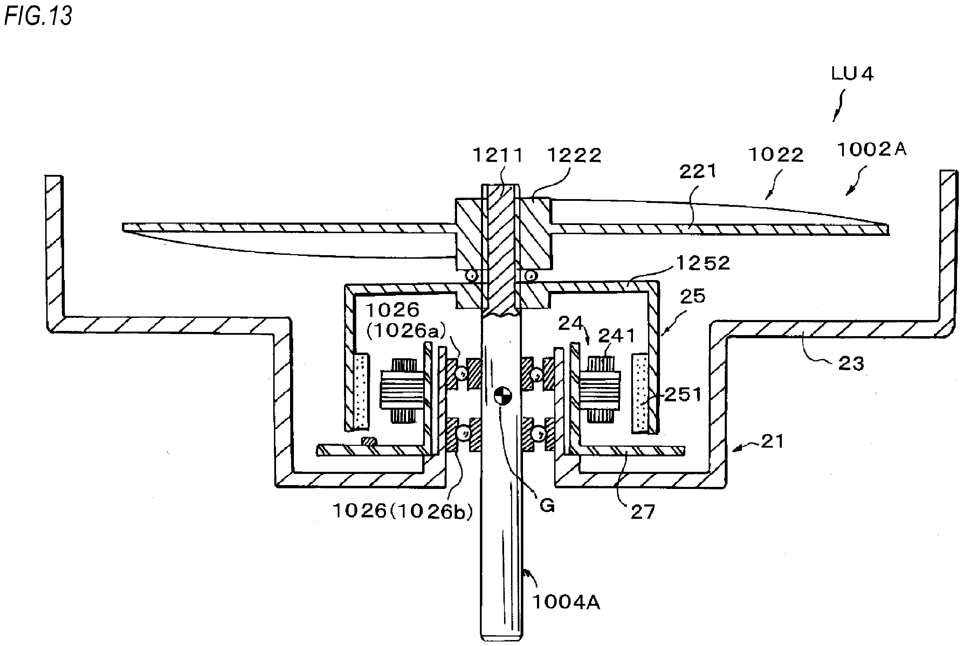

FIG. 13 is a longitudinal sectional view of a reflector unit 1002A of the fourth embodiment. In the fourth embodiment, instead of the balance weight 1004 of the third embodiment, the other end portion of the rotary shaft 1211 is configured as an extension portion 1004A protruding from the casing 23 toward the backside (the downward direction, in FIG. 13). As shown in FIG. 13, the extension portion 1004A is configured to extend from bearings 1026b disposed on the other end portion-side of the rotary shaft 1211 toward the backside of the casing 23. That is, the extension portion 1004A is configured so that an extension length of the other end portion of the rotary shaft 1211 from the bearing 1026 (1026b) disposed on the other end portion-side is longer than an extension length of one end portion of the rotary shaft 1211 from the bearing 1026 (1026a) disposed on one end portion-side of the rotary shaft 1211.

Like this, in the fourth embodiment, the extension portion 1004A is provided, so that the center-of-gravity position G of the rotary shaft 1211 is shifted toward the other end portion-side (the downward direction, in FIG. 13) and the center-of-gravity position G is located between the pair of ball bearings 1026 in the axial direction. Also, although not shown, when the rotary shaft 1211 is configured so that a radial dimension of the extension portion 1004A is relatively greater than a part on one end-side, it is possible to shorten a length of the extension portion 1004A in the upper and lower direction in FIG. 13.

### (Fifth Embodiment)

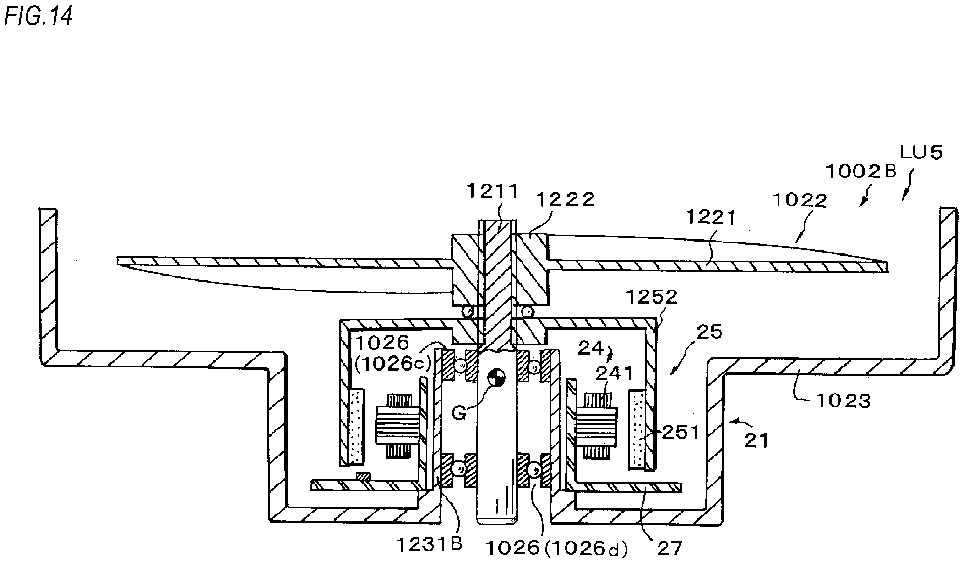

FIG. 14 is a longitudinal sectional view of a reflector unit 1002B of a lamp unit LU5 of a fifth embodiment. In the fifth embodiment, the configurations, which are similar to the first or third embodiment, are denoted with the same reference signs or the 1000s corresponding signs and the overlapping descriptions thereof are omitted.

In the fifth embodiment, instead of shifting the center-of-gravity position of the rotary shaft 1211 to the other end portion side, a bearing tube 1231B of a casing 1023 is configured so that an upward protrusion length in FIG. 14 increases. A tip end of the bearing tube 1231B is formed to be as close as possible to an inner bottom surface of the rotor yoke 1252. The ball bearing 1026c, which is located on one end portion-side of the rotary shaft 1211, of the pair of ball bearings 1026 is moved and disposed on a tip end side of the rotary shaft 1211 (an upper end side of the rotary shaft 1211 in FIG. 14). That is, the ball bearing 1026c on the tip end side of the bearing tube 1231B is moved to the tip end side of the bearing tube 1231B and is disposed in a position more protruding toward one end portion than the coils 241 of the stator 24. Thereby, the ball bearing 1026c, which is located on one end portion-side of the rotary shaft 1211, of the pair of ball bearings 1026 is disposed closer to one end portion of the rotary shaft 1211 (closer to the upper end portion in FIG. 14) than the stator 24, so that an interval dimension between the pair of ball bearings 1026 (1026c, 1026d), i.e., an interval dimension in the axial direction of the rotary shaft 1211 is increased and the center-of-gravity position G of the rotary shaft 1211 can be located between the pair of ball bearings 1026.

### (Sixth Embodiment)

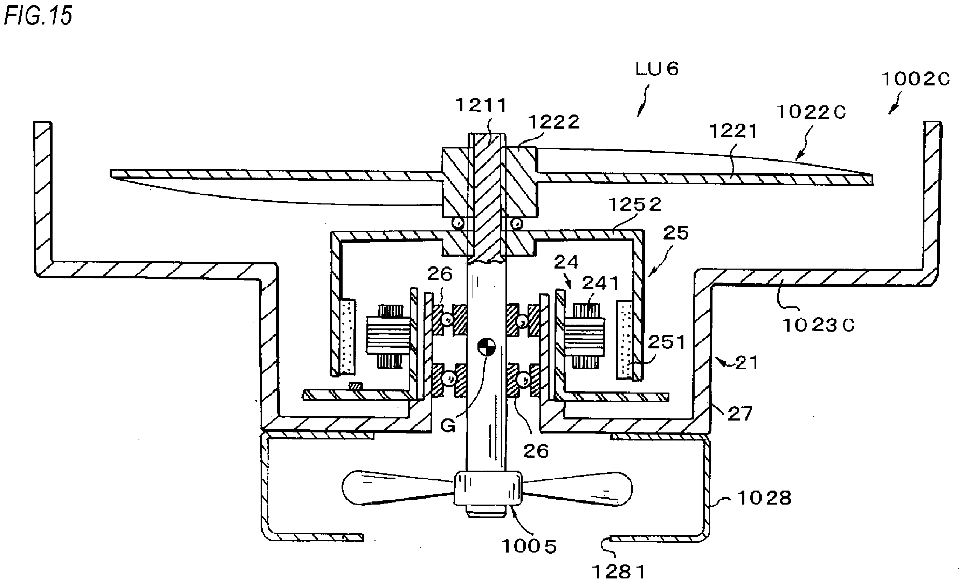

The balance weight may be formed different from the above embodiments. FIG. 15 is a longitudinal sectional view of a reflector unit 1002C of a lamp unit LU6 of a sixth embodiment. In the sixth embodiment, the configurations, which are similar to the first or third embodiment, are denoted with the same reference signs or the 1000s corresponding signs and the overlapping descriptions thereof are omitted.

In the sixth embodiment, instead of the balance weight 1004 of the third embodiment, a heat radiation fan 1005 is mounted to the other end portion (the lower end portion in FIG. 15) of the rotary shaft 1211. As the heat radiation fan 1005, a cooling fan for diverse electronic components can be used as it is. Also, a heat radiation duct 1028 having the heat radiation fan 1005 embedded therein is provided on the backside of the casing 1023C.

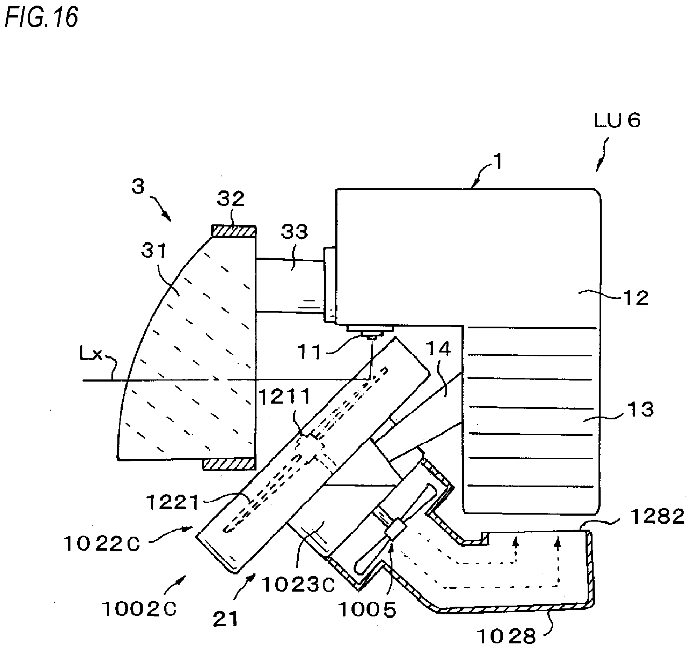

The heat radiation duct 1028 has a vessel shape surrounding the heat radiation fan 1005, and is mounted to the backside of the casing 1023C. A part of the heat radiation duct 1028 is provided with an air intake port 1281 in a position facing toward the heat radiation fan 1005. Also, as shown in FIG. 16, the heat radiation duct 1028 extends to a position facing the heat radiation fins 13 of the heat sink 12. An extension end of the heat radiation duct 1028 is formed with an opened air supply port 1282.

The heat radiation fan 1005 has a predetermined weight. Therefore, as with the balance weight 1004 of the third embodiment, the center-of-gravity position G of the rotary shaft 1211 is shifted toward the other end portion due to the weight and can be thus set to a position between the pair of ball bearings 26 in the axial direction. Thereby, the precession movement of the rotary shaft 1211 is prevented, so that the rotary reflector 1022C is stably rotated. The stable rotation of the rotary reflector 1022C enables the proper reflection of the light from the LED 11 and the favorable scan.

Also, when the heat radiation fan 1005 is rotated in conjunction with the rotation of the rotary shaft 1211, an air stream is generated in the heat radiation duct 1028. In the sixth embodiment, the air is introduced from the air intake port 1281 of the heat radiation duct 1028, and the introduced air is discharged from the air supply port 1282. The discharged air is blown toward the heat radiation fins 13, thereby increasing the heat radiation effect of the heat sink 12. Thereby, the heat generated upon the light emission of the LED 11 is effectively radiated by the heat sink 12, so that it is possible to obtain the cooling effects for the LED 11 to the lamp unit LU6.

In the meantime, the heat radiation duct 1028 is not necessarily required, and is also effective in suppressing an increase in temperature in a lamp housing having the lamp unit LU6 embedded therein or preventing dew condensation in the lamp housing by rotating the heat radiation fan 1005 to circulate the air in the lamp housing.

The shape of the balance weight is not limited to the circular plate shape shown in the above embodiments. Also, the configuration having the weight replacing the balance weight is not limited to the heat radiation fan. Also, it is possible to appropriately adjust the center-of-gravity position by changing a position in which the weight balance is mounted to the rotary shaft. For example, the other end portion of the rotary shaft may be formed with a screw thread, the balance weight may be screwed to the screw thread and the screwing position may be changed to adjust the center-of-gravity position of the rotary shaft.

The present disclosure is not limited to the lamp unit having the brushless motor in accordance with the third to sixth embodiments. For example, the present disclosure can also be applied to a DC motor with a brush in which the rotary reflector is mounted to one end portion of the rotary shaft having the rotor mounted thereto.

### (Seventh Embodiment)

Subsequently, a seventh embodiment is described with reference to the drawings. In the seventh embodiment, the configurations, which are similar to the first embodiment, are denoted with the same reference signs or the 2000s corresponding signs and the overlapping descriptions thereof are omitted.

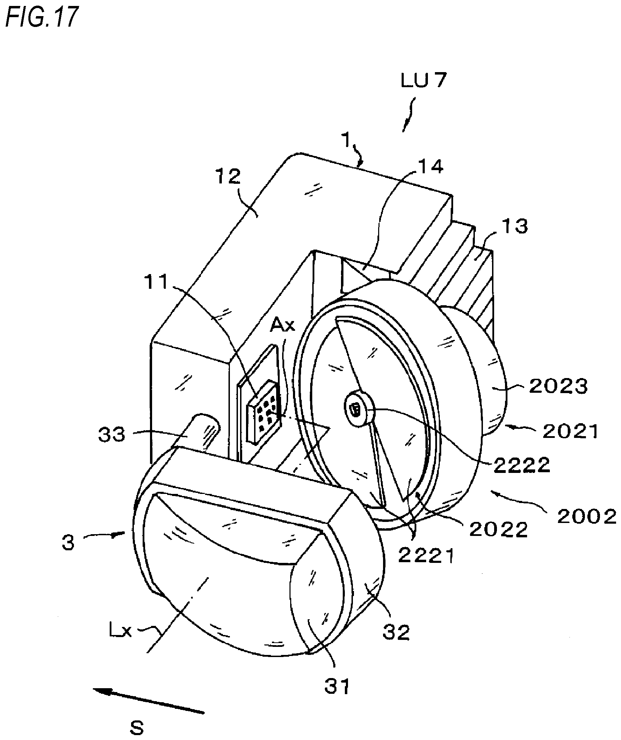

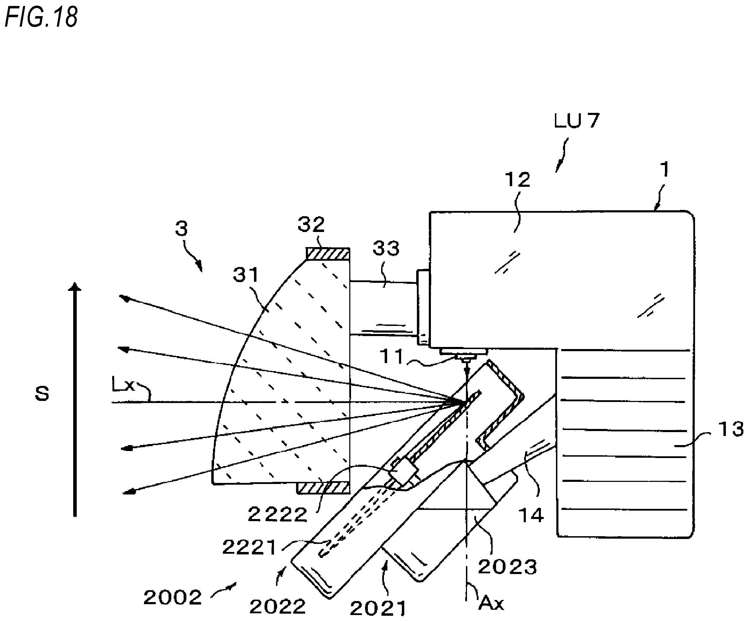

FIG. 17 is a perspective view depicting an outline of the seventh embodiment configured as a lamp unit LU7 of a headlamp of an automobile. FIG. 18 is a partially broken left side view of the lamp unit LU7 of FIG. 17. As with the lamp unit LU1 of the first embodiment, the lamp unit LU7 is configured as the lamp unit for ADB light distribution control, for example. The lamp unit LU7 has the light source unit 1, a reflector unit 2002, and the projector lens unit 3, which are integrally configured as one unit.

A schematic configuration of the lamp unit LU7 is described. In the meantime, since the configurations of the light source unit 1 and the projector lens unit 3 are similar to those of the lamp unit LU1 of the first embodiment, they are denoted with the same reference signs and the descriptions thereof are omitted.

The reflector unit 2002 includes a motor 2021, and a rotary reflector 2022 configured to be rotated by the motor 2021, and is supported to the heat sink 12 by the stem 14.

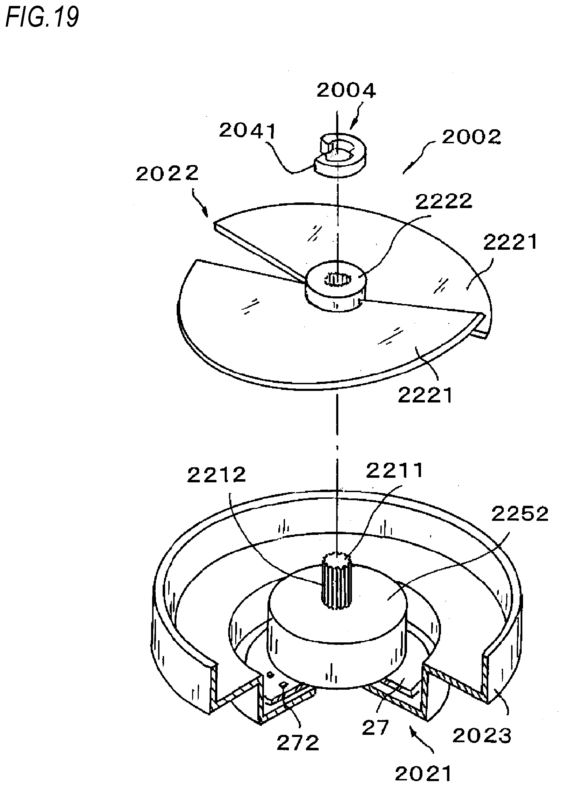

FIG. 19 is a perspective view of the reflector unit 2002, and is a partially broken perspective view of a casing 2023. Also in the seventh embodiment, two blades 2221 are formed integrally with a boss 2222 by resin molding. At least surfaces of both the blades 2221 are respectively formed with a light reflecting film obtained by vapor depositing or plating an aluminum film. Gaps extending in a radial direction are respectively formed between the two blades 221 in a circumferential direction. The other configurations of the reflector unit 2002 are similar to the reflector unit 2 of the first embodiment.

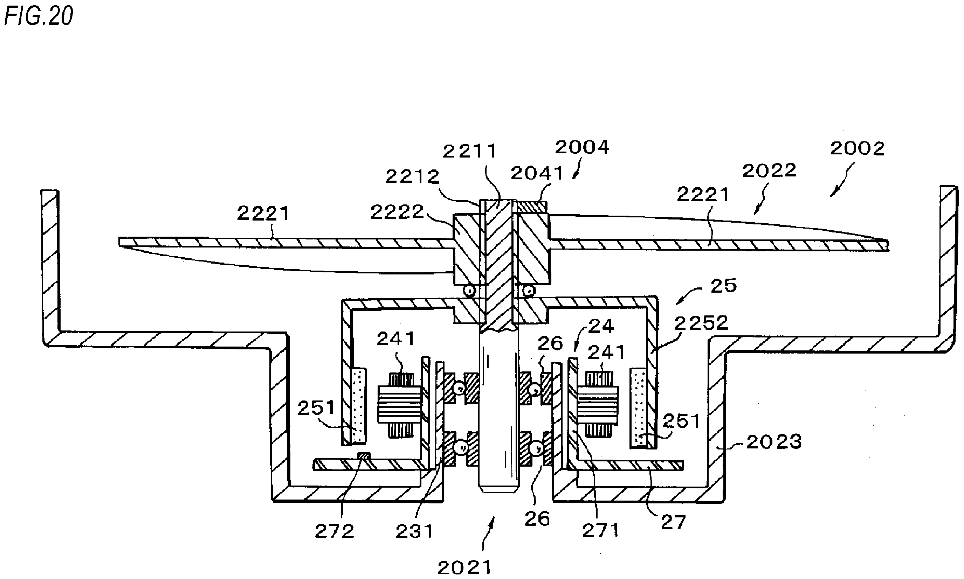

FIG. 20 is a longitudinal sectional view of the reflector unit 2002. The configuration of the motor 2021 for rotating the rotary reflector 22 is similar to the motor 21 of the first embodiment.

Also, as with the rotor yoke 1252 of the third embodiment, a rotor yoke 2252 is mounted to a rotary shaft 2211 of the motor 2021. The configuration of the rotor yoke 2252 is similar to the rotor yoke 1252 of the third embodiment, and the coils 241 and the magnets 251 are similar to the coils 241 and the magnets 251 of the first embodiment.

The boss 2222 of the rotary reflector 2022 is integrally mounted to the rotary shaft 2211 with being fitted to one end portion of the rotary shaft 2211, herein, an end portion of a side on which the rotor yoke 2252 is mounted. Thereby, when the motor 2021 is driven and the rotary shaft 2211 is thus rotated, the rotary reflector 2022 is rotated, so that the rotation of blades 2221 associated with the rotation enables the reflection of the light from the LED 11 and the illumination by scan.

Like this, in the seventh embodiment, the rotary reflector 2022 and the rotor yoke 2252 are respectively mounted to one end portion of the rotary shaft of the motor 2021. Thereby, when assembling the reflector unit 2002, as with the assembling of the reflector unit 1002 of the third embodiment, the circuit board 27 is mounted to the casing 2023 having the rotary shaft 2211 pivotally supported thereto, so that the stator 24 is configured. Thereafter, the rotor yoke 2252 is mounted to the rotary shaft 2211 and the rotary reflector 2022 is additionally mounted to the rotary shaft 2211, which operations can be performed from one side of the casing 2023. Therefore, it is possible to easily assemble the motor 2021 and the rotary reflector 2022. Also, after mounting the reflector unit 2002 to the heat sink 12, it is possible to easily perform maintenance for the motor 2021 and the rotary reflector 2022.

In the rotary reflector 2022 of the seventh embodiment, as described above, the two blades 2221 are formed integrally with the boss 2222 by resin molding. Also, the blade 2221 has such a configuration that the surface of the blade 2221 is formed with the aluminum film for light reflection by the vapor deposition, the plating or the like. Herein, when manufacturing variations occur during the resin molding or the vapor deposition, errors of a size, a thickness and the like of each blade 2221 may occur due to the manufacturing variations. When the errors occur, the weight balance of the two point-symmetrical blades 2221 may be imbalanced. That is, the weight balance in the circumferential direction and the radial direction of the rotary reflector 2022 of which the boss 2222 is a center may be imbalanced.

If the imbalance of the weight balance exists in each of the blades 2221, when the rotary reflector 2022 is rotated by the motor 2021, the rotational moment in the rotary reflector 2022 may vary. As a result, the rotation speed variation occurs in the rotary reflector 2022 or the ruffling phenomenon occurs in the blade 2221. Thereby, the scan speed of the light flux varies and the straightness of the scan is lowered, so that the illumination quality is deteriorated.

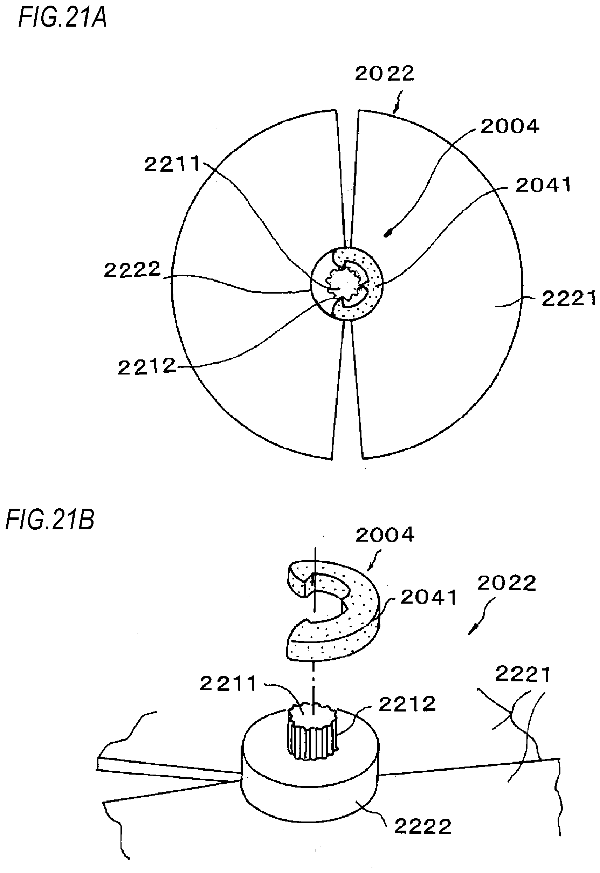

Therefore, in the seventh embodiment, as shown in FIGS. 21A and 21B, an E-ring 2041 is provided as a weight balance adjusting means 2004 so as to adjust weight balance of the rotary reflector 2022. That is, the E-ring 2041 is mounted to the boss 2222, which is a center of rotation of the rotary reflector 2022. In the seventh embodiment, one end portion of the rotary shaft 2211 is formed with a spline 2212 for mounting the rotor yoke 2252 and the rotary reflector 2022. The E-ring 2041 is engaged to the rotary shaft 2211. Thereby, the E-ring 2041 is indirectly mounted to the boss 2222 via the rotary shaft 2211 via the spline 2212. In the meantime, the E-ring 2041 can also be used to prevent the rotary reflector 2022 from falling off from the rotary shaft 2211.

The E-ring 2041 is engaged to the rotary reflector 2022 in one direction, i.e., to the rotary shaft 2211 in the radial direction from a low weight side of the rotary reflector 2022 in the circumferential direction or the radial direction, so that a weight of the rotary reflector 2022 on the side to which the E-ring 2041 is engaged is increased. Therefore, it is possible to balance the weight balance of the rotary reflector 2022 by changing the circumferential engagement position of the E-ring 2041 to the rotary shaft 2211 to adjust the weight balance of the rotary reflector 2022 in the circumferential direction and the radial direction. Thereby, when the rotary reflector 2022 is rotated by the motor 2021, the rotating speed becomes uniform. Also, the ruffling phenomenon of the blade 2221 is resolved, and the uniform scan speed of the light flux and the straightness of the scan can be secured, so that the illumination quality is improved.

In the seventh embodiment, the E-ring is used. However, a C-ring may be used to adjust the weight balance. For example, the C-ring may be bonded to the boss of the rotary reflector by an adhesive or an adhesive tape such as a double-sided tape, and an adhesion position of the C-ring may be adjusted to adjust the weight balance.

The E-ring or C-ring of the seventh embodiment has been described as a representative example of the weight balance adjusting means, and the aspect of adjusting the weight balance is not limited to the E-ring or C-ring. For example, as an aspect of adjusting the weight balance, a non-point symmetric or asymmetric ring member, which can adjust the weight balance in the circumferential direction and the radial direction when mounted to the rotary shaft or the boss, may be adopted.

### (Eighth Embodiment)

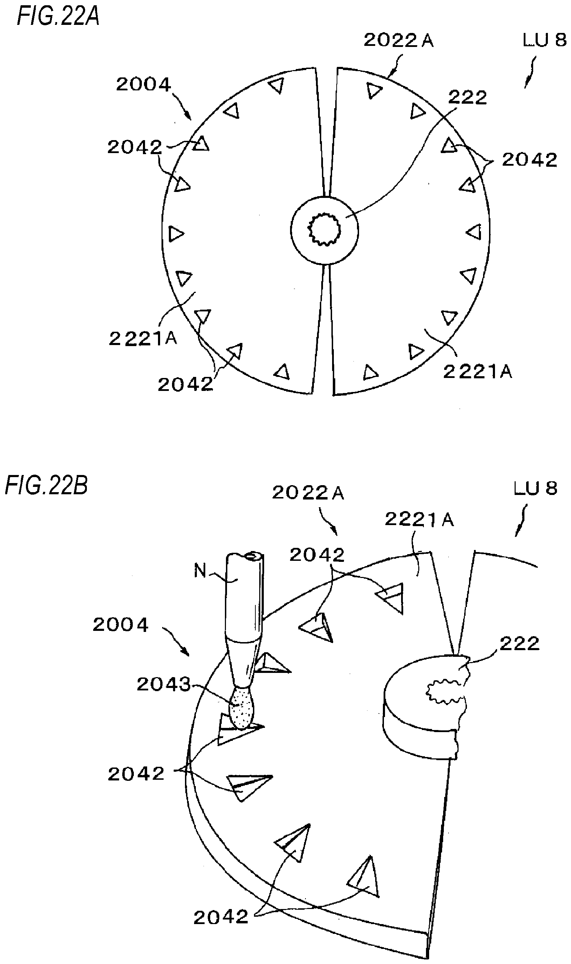

FIG. 22A is a plan view depicting a surface of a rotary reflector 2022A of an eighth embodiment. FIG. 22B is a partial perspective view of the rotary reflector 2022A of the eighth embodiment. In the eighth embodiment, the configurations, which are similar to the seventh embodiment, are denoted with the same reference signs or the 2000s corresponding signs and the overlapping descriptions thereof are omitted.

In the eighth embodiment, concave portions 2042 are provided as the weight balance adjusting means 2004. The concave portions 2042 are provided in plural along circumferential edges of blades 2221A of the rotary reflector 2022A. In the eighth embodiment, a surface of the blade 2221A is provided with the triangular or fan-shaped concave portions 2042 having a depth smaller than a thickness of the blade 2221A in such an aspect that the concave portions are aligned in the circumferential direction of the blade 2221A. The concave portions 2042 may also be provided on a backside of the blade 2221A. Alternatively, the concave portions may also be provided on both the surface and the backside. Also, the concave portion 2042 may be formed to have any shape such as a circular shape, a rectangular shape and the like.

When adjusting the weight balance of the rotary reflector 2022A, as shown in FIG. 22B, cream-like or liquid resin 2043 (an example of a weight member) is injected into one or more concave portions 2042 located on the low weight side of the rotary reflector 2022A by potting or the like with a nozzle N or the like, and then the resin 2043 is cured and integrated with the blade 2221A. Thereby, a weight of the rotary reflector 2022A on the side on which the resin 2043 is injected is increased, so that the weight balance of the rotary reflector 2022A in the circumferential direction and the radial direction can be adjusted.

In the eighth embodiment, it is possible to finely adjust the weight balance by appropriately setting sizes, the number and formation positions of the concave portions 2042 into which the resin 2043 is to be injected. Also, it is possible to finely adjust the weight balance by injecting resins having different specific weights. In the eighth embodiment, the weight balance is adjusted at the circumferential edge of the blade 2221A having a large radial dimension. Therefore, even with a small amount of the resin 2043, it is possible to increase an adjustment width of the weight balance and to increase the effectiveness of the balance adjustment.

### (Ninth Embodiment)

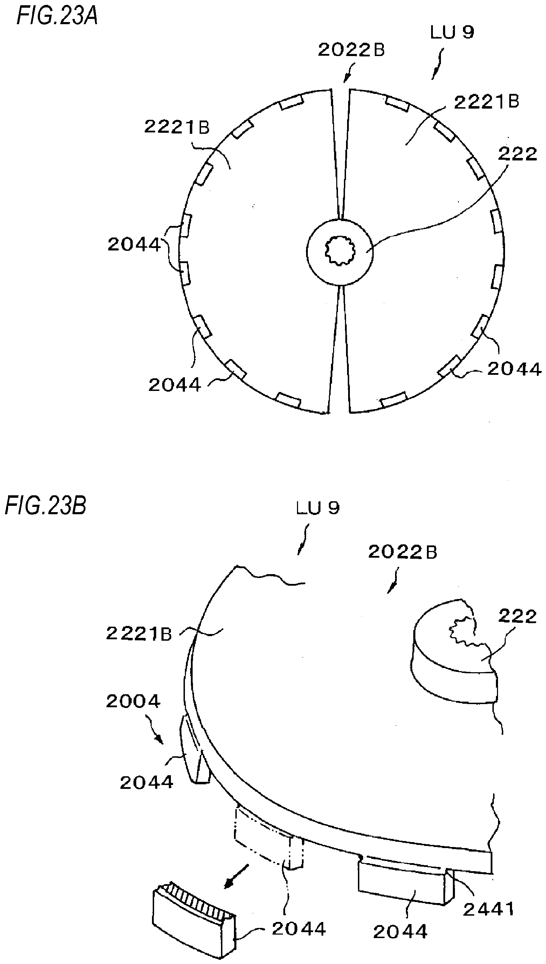

FIG. 23A is a bottom view depicting a backside of a rotary reflector 2022B of a ninth embodiment. FIG. 23B is a partial perspective view of the rotary reflector 2022B of the ninth embodiment. In the ninth embodiment, the configurations, which are similar to the seventh embodiment, are denoted with the same reference signs or the 2000s corresponding signs and the overlapping descriptions thereof are omitted.

In the ninth embodiment, convex portions 2044 each of which has a protrusion piece shape are provided as the weight balance adjusting means 2004. The convex portions are formed in plural on backsides of blades 2221B of the rotary reflector 2022B along circumferential edges of the blades. In the ninth embodiment, a plurality of convex portions 2044 having a protrusion piece shape is formed integrally with the blades 2221B. The convex piece 2044 is configured so that it can be easily broken when applying external force thereto or can be easily cut by a tool such as a nipper and can be thus eliminated from the blade 2221B, and a part of the convex piece 2044 is formed with a groove 2441, for example.

When adjusting the weight balance of the rotary reflector 2022B, one or more convex pieces 2044 located on a high weight side of the rotary reflector 2022B are selected and broken or cut, as shown with the dashed-two dotted line in FIG. 23B. Thereby, the weight of the rotary reflector 2022B is reduced on the side on which the broken or cut convex piece 2044 was provided, so that it is possible to adjust the weight balance of the rotary reflector 2022B in the circumferential direction and the radial direction.

In the ninth embodiment, when breaking or cutting the convex piece 2044, a part of the convex piece 2044 may be eliminated. For example, a half or a fraction of a protrusion dimension of the convex piece 2044 may be eliminated. Thereby, it is possible to finely adjust the weight balance. Also, the convex portion of the ninth embodiment may be configured by a pin member integrated with the blade 2221B, instead of the convex piece 2044.

### (Tenth Embodiment)

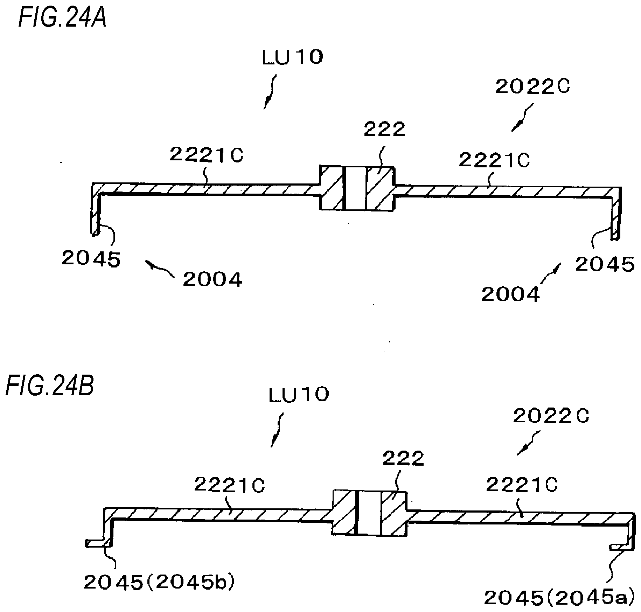

FIG. 24A is a sectional view of a rotary reflector 2022C of a tenth embodiment. In the tenth embodiment, the configurations, which are similar to the seventh embodiment, are denoted with the same reference signs or the 2000s corresponding signs and the overlapping descriptions thereof are omitted.

In the tenth embodiment, as the weight balance adjusting means, a plurality of tongue-shaped convex pieces 2045 is formed integrally on backsides of blades 2221C of the rotary reflector 2022C along circumferential edges of the blades. A shape of the convex piece 2045 is similar to the convex portion (convex piece 2044) of the ninth embodiment shown in FIG. 23A, and is provided substantially upright with respect to the backside of the blade 2221C. Also, the convex piece 2045 is configured so that it can be easily bent when the external force is applied thereto, like the convex piece 2044 of the ninth embodiment. The weight balance adjusting means of the tenth embodiment is particularly effective when the rotary reflector 2022C is formed by punching or bending a metal plate.

When adjusting the weight balance of the rotary reflector 2022C, as shown in FIG. 24B, one or more convex pieces 2045 (2045a) located on the high weight side (the right side in FIG. 24B) of the rotary reflector 2022C are bent inwardly. Also, one or more convex pieces 2045 (2045b) located on the low weight side (the left side in FIG. 24B) of the rotary reflector 2022C are bent outwardly. Thereby, while the moment force of the side on which the outwardly bent convex pieces 2045b exist increases, the moment force of the side on which the inwardly bent convex pieces 2045a exist increases decreases, so that the weight balance of the rotary reflector 2022C can be adjusted.

The rotary reflector 2022C of the tenth embodiment is not necessarily required to be formed of the metal material. For example, a resin material may be used inasmuch as the convex portion provided integrally with the blade can be bent.

In the present disclosure, the motor configured to rotate the rotary reflector is not limited to the brushless motor described in the seventh to tenth embodiments. For example, the present disclosure can also be applied to a DC motor with a brush in which the rotary reflector is mounted to the rotary shaft. Also, in the seventh to tenth embodiments, the rotor of the motor and the rotary reflector are mounted to one end portion of the rotary shaft with respect to the ball bearings configured to pivotally support the rotary shaft of the motor. However, the present disclosure can also be applied to a reflector unit in which the rotor is mounted to the other end portion of the rotary shaft, in the same manner.

### (Eleventh Embodiment)

Subsequently, an eleventh embodiment is described with reference to the drawings. In the eleventh embodiment, the configurations, which are similar to the first or third embodiment, are denoted with the same reference signs or the 3000s corresponding signs and the overlapping descriptions thereof are omitted.

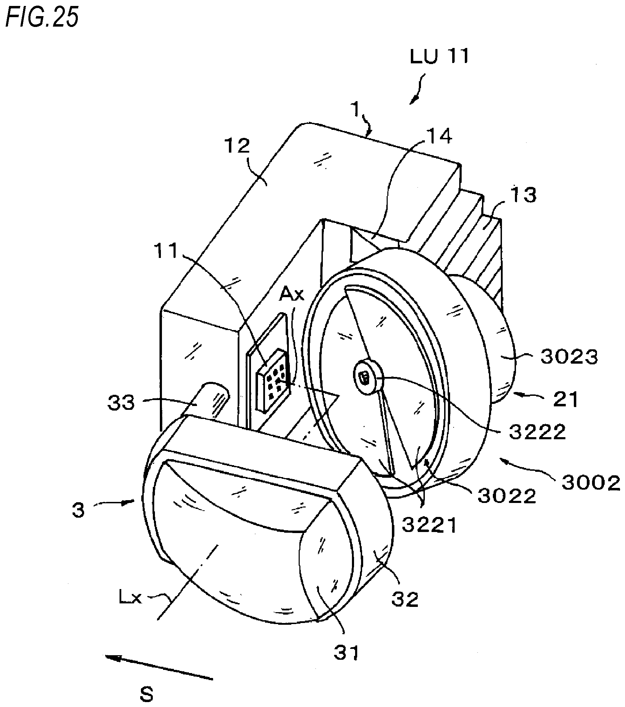

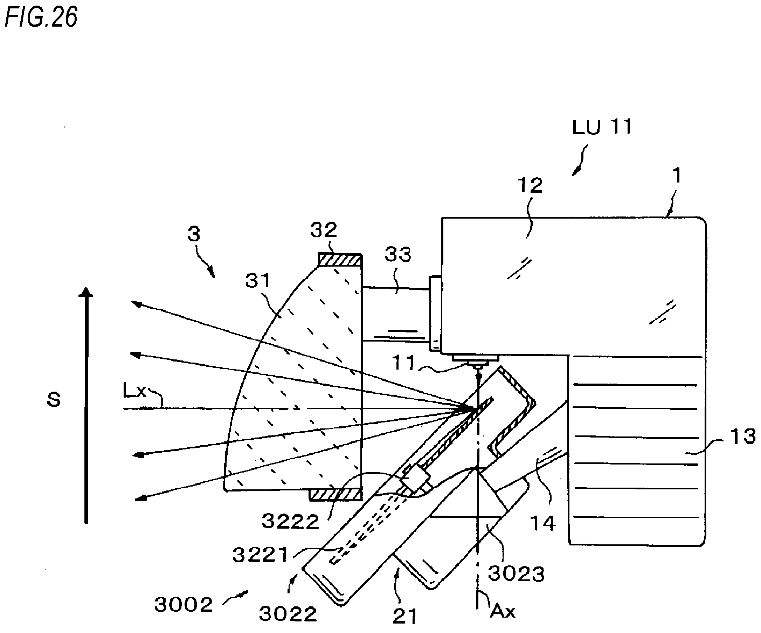

FIG. 25 is a perspective view depicting an outline of the eleventh embodiment configured as a lamp unit LU11 of a headlamp of an automobile. FIG. 26 is a partially broken left side view of the lamp unit LU11 of FIG. 25. As with the lamp unit LU1 of the first embodiment, the lamp unit LU11 is configured as the lamp unit for ADB, for example. The lamp unit LU11 has the light source unit 1, a reflector unit 3002, and the projector lens unit 3, which are integrally configured as one unit.

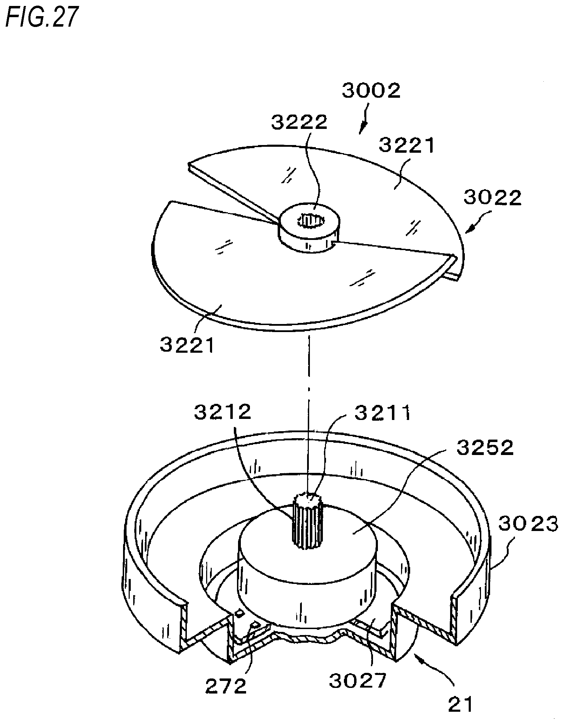

FIG. 27 is a perspective view of the reflector unit 3002, and is a partially broken exploded perspective view of a casing 3023. The configuration of the reflector unit 3002 is similar to the reflector unit 2 of the first embodiment. At least surfaces of both blades 3221 are respectively formed with a light reflecting film obtained by vapor depositing or plating an aluminum film. The configuration of the reflector unit 3002 is similar to that of the reflector unit 2 of the first embodiment.

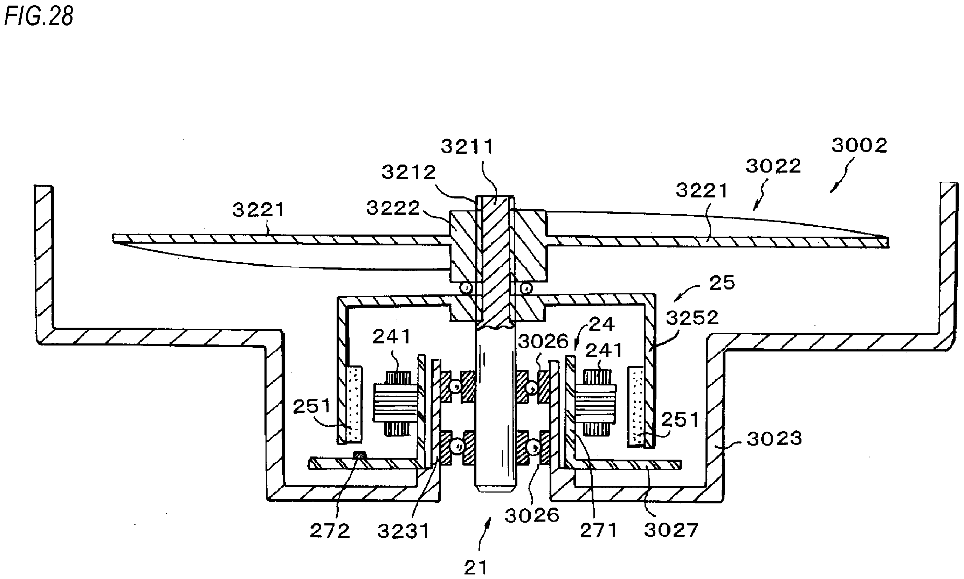

FIG. 28 is a longitudinal sectional view of the reflector unit 3002. The configuration of the motor 21 for rotating the rotary reflector 3022 is similar to the motor 21 of the first embodiment.

A rotor yoke 3252 is mounted to a rotary shaft 3211. The rotor yoke 3252 of the eleventh embodiment is formed of a ferromagnetic material, like the rotor yoke 1252 of the third embodiment. Also, the rotor yoke 3252 is fitted and integrally supported to a spline 3212 of the rotary shaft 3211 in a rotating direction at a center of a bottom wall of the circular casing 3023. The other configurations of the rotor yoke 3252 are similar to the rotor yoke 1252 of the third embodiment, and the coils 241 and the magnets 251 are similar to the coils 241 and the magnets 251 of the first embodiment.

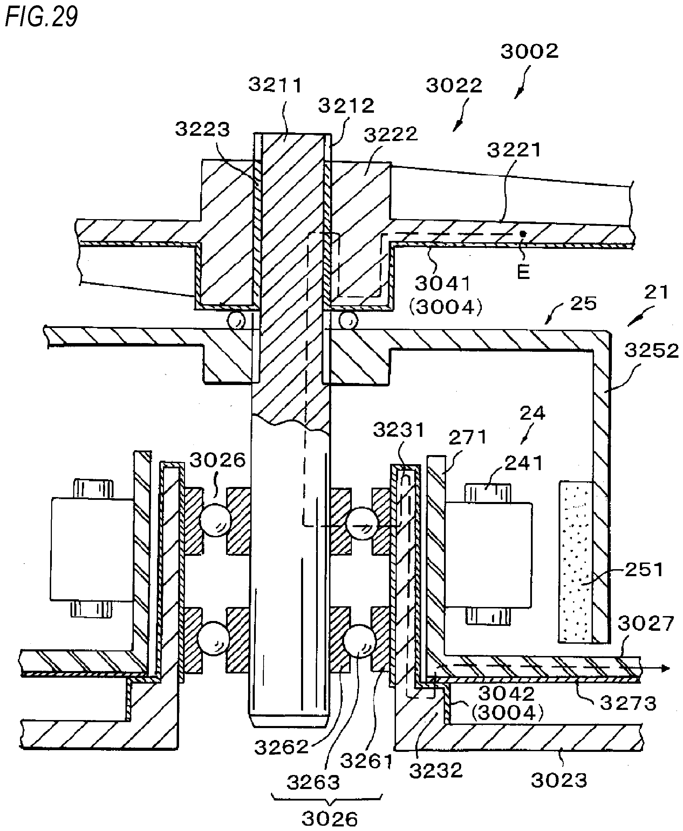

As shown in FIG. 29, a boss 3222 of the rotary reflector 3022 is provided with a mounting hole 3223. The mounting hole 3223 is fitted with the spline 3212 of an end portion of a side, on which the rotor yoke 3252 is mounted, of one end portion of the rotary shaft 3211. Thereby, the rotary reflector 3022 is integrally mounted to the rotary shaft 3211. Therefore, when the motor 21 is driven and the rotary shaft 3211 is thus rotated, the rotary reflector 3022 is rotated. In conjunction with the rotation, the blade 3221 is rotated to reflect the light from the LED 11 and to perform the illumination by scan, as described above.

Like this, in the eleventh embodiment, the rotary reflector 3022 and the rotor yoke 3252 are respectively mounted to one end portion of the rotary shaft of the motor 21. Thereby, when assembling the reflector unit 3002, as with the assembling of the reflector unit 1002 of the third embodiment, the circuit board 27 is mounted to the casing 3023 having the rotary shaft 3211 pivotally supported thereto, so that the stator 24 is configured. Thereafter, the rotor yoke 3252 is mounted to the rotary shaft 3211 and the rotary reflector 3022 is additionally mounted to the rotary shaft 3211, which operations can be performed from one side of the casing 3023. That is, it is possible to easily assemble the motor 21 and the rotary reflector 3022. Also, after mounting the reflector unit 3002 to the heat sink 12, it is possible to easily perform maintenance for the motor 21 and the rotary reflector 3022.

In the lamp unit LU11, the blade 3221 of the rotary reflector 3022 has a light reflecting surface obtained by forming an aluminum film on a surface of resin, as described above. For this reason, when the rotary reflector 3022 is rotated at high speed, the static electricity may be generated in the blade 3221 due to friction with the surrounding air and the like and the resin part may be thus electrified. When the blade is electrified with the static electricity, wastes and fine foreign matters may be attached to the light reflecting surface of the blade due to the static electricity. Alternatively, the electrified static electricity is discharged between the blade and a conductor adjacent to the rotary reflector 3022, so that the light reflecting surface on which the discharge has occurred, herein, a part of the aluminum-deposited surface may be damaged. In this case, it is difficult to normally reflect and scan the light flux emitted from the light source on the damaged part of the light reflecting surface, so that the reliability of the lamp unit LU may be lowered.

Therefore, in the eleventh embodiment, an electric discharge means 3004 for discharging the static electricity generated in the rotary reflector 3022 to a ground is provided. FIG. 29 is a partially enlarged sectional view of the reflector unit 3002. In the eleventh embodiment, the reflector unit 3002 is formed with a first conductive film 3041 and a second conductive film 3042, as the electric discharge means 3004. The first conductive film 3041 and the second conductive film 3042 correspond to a first conductive part and a second conductive part of the present disclosure.

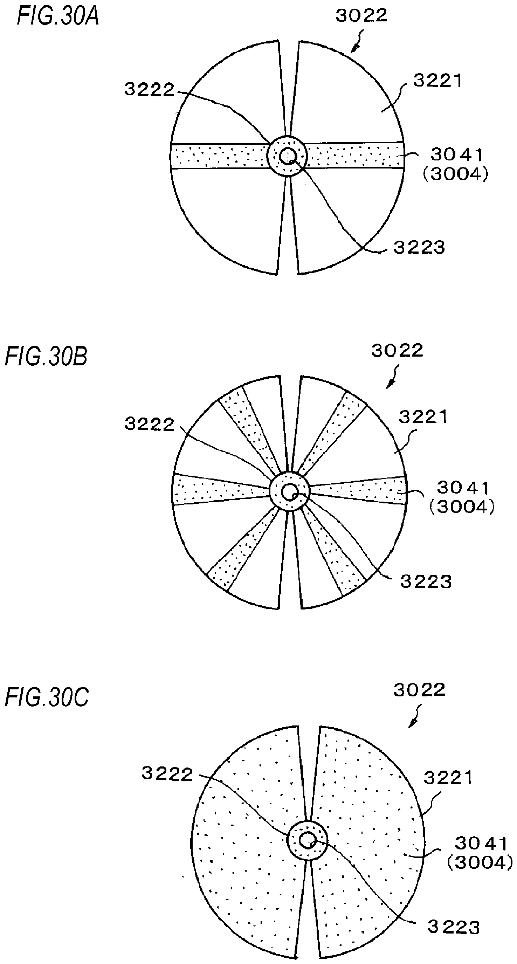

The first conductive film 3041 is formed on a backside of the light reflecting surface of the rotary reflector 3022 (a backside of the blade 3221 and a backside of the boss 3222). The first conductive film 3041 is a conductive film having a necessary pattern shape. FIGS. 30A to 30C are bottom views depicting the backside of the rotary reflector 3022, showing various shapes of the first conductive film 3041. The first conductive film 3041 shown in FIG. 30A is configured as a conductive film having a straight line pattern shape, which is a part of the blades 3221 in the circumferential direction, including the boss 3222, and extends in the radial direction. The first conductive film 3041 shown in FIG. 30B is configured as a conductive film having a plurality of radial line pattern shapes about the boss 3222. The first conductive film 3041 shown in FIG. 30C is configured as a conductive film having a pattern shape over a substantially entire region of the backsides of the blades 3221 including the boss 3222.

The first conductive film 3041 may be formed at the same time with the aluminum-deposited film formed on the blades 3221 for forming the light reflecting surfaces or may be formed by an independent process. Also, even when the first conductive film 3041 is formed to have any pattern shown in FIGS. 30A to 30C, the first conductive film is configured to extend to the inner surface of the mounting hole 3223 formed in the boss 3222, i.e., the mounting hole 3223 for mounting the rotary shaft 3211 of the motor 21, in the region of the boss 3222, as shown in FIG. 29.

Therefore, when the rotary reflector 3022 is mounted to the rotary shaft 3211 by fitting one end portion of the rotary shaft 3211 into the mounting hole 3223 of the boss 3222, the circumferential surface of the rotary shaft 3211 is electrically connected to the first conductive film 3041, so that the first conductive film 3041 becomes conductive to the rotary shaft 3211.

In the meantime, as shown in FIG. 29, the second conductive film 3042 is formed in a partial region of the inner surface of the casing 3023 of the motor 21. In the eleventh embodiment, the second conductive film 3042 is an aluminum film. The aluminum film that is the second conductive film 3042 is formed by vapor deposition or coating. The second conductive film 3042 is formed to have a necessary pattern shape continuing at least from a region in which a circuit board 3027 is disposed to a region of an outer peripheral surface of a bearing tube 3231 of the casing 3023 and from the region of the outer peripheral surface to a region of an inner peripheral surface of the bearing tube 3231.

In a state in which the circuit board 3027 is disposed in the casing 3023, a stepped portion 3232 is provided on a base part of the bearing tube 3231. On the stepped portion 3232, a ground wiring 3273 configured as a part of a printed wiring formed on the circuit board 3027 is electrically connected and is thus conductive to the second conductive film 3042. Although not shown, the ground wiring 3273 is electrically connected to a ground part of the automobile having the headlamp mounted thereto. For example, the ground wiring 3273 is electrically connected to the ground part of the automobile via a ground line (not shown) connected to the ground wiring 3273. Alternatively, the ground wiring 3273 is electrically connected to the light source unit 1 formed by a conductive member such as metal, particularly, to the heat sink 12, and is electrically connected to the ground part of the automobile via the heat sink 12.

Also, in the bearing tube 3231, the pair of ball bearings 3026 disposed in the bearing tube 3231 is electrically connected to the second conductive film 3042. The ball bearing 3026 has an outer race 3261, an inner race 3262, and a ball 3263. The outer race 3261, the inner race 3262, and the ball 3263 are formed by conductive members such as metal, and are conductive to each other through inter-contact. The outer race 3261 of the ball bearing 3026 is electrically contacted and conductive to the second conductive film 3042, and the inner race 3262 is electrically contacted and conductive to the circumferential surface of the rotary shaft 3211.

By the above configuration, the first conductive film 3041 provided to the rotary reflector 3022 is conductive to the rotary shaft 3211, is conductive from the rotary shaft 3211 to the inner races 3262 of the ball bearings 3026, is conductive to the outer races 3261 via the balls 3263, and is conductive from the outer races 3261 to the second conductive film 3042. Then, the first conductive film is conductive from the second conductive film 3042 to the ground wiring 3273 of the circuit board 3027, and is grounded, as described above.

Therefore, when the rotary reflector 3022 is driven and the static electricity (static charge) E is generated in the blade 3221, the static electricity E is discharged from the blade 3221 or the boss 3222 to the first conductive film 3041 and is discharged from the first conductive film 3041 to the rotary shaft 3211, as shown with the broken line arrow in FIG. 29. Also, the static electricity E may be discharged from the rotary shaft 3211 to the second conductive film 3042 via the ball bearing 3026, and discharged from the second conductive film 3042 to the ground via the ground wiring 3273 of the circuit board 3027. Thereby, in particular, it is possible to prevent the attachment of foreign matters on the light reflecting surface due to the static electricity E electrified in the blade 3221 or to prevent the damage of the light reflecting surface due to the discharge of the static electricity. Thereby, it is possible to realize the stable light scan by the rotary reflector 3022.

### (Twelfth Embodiment)

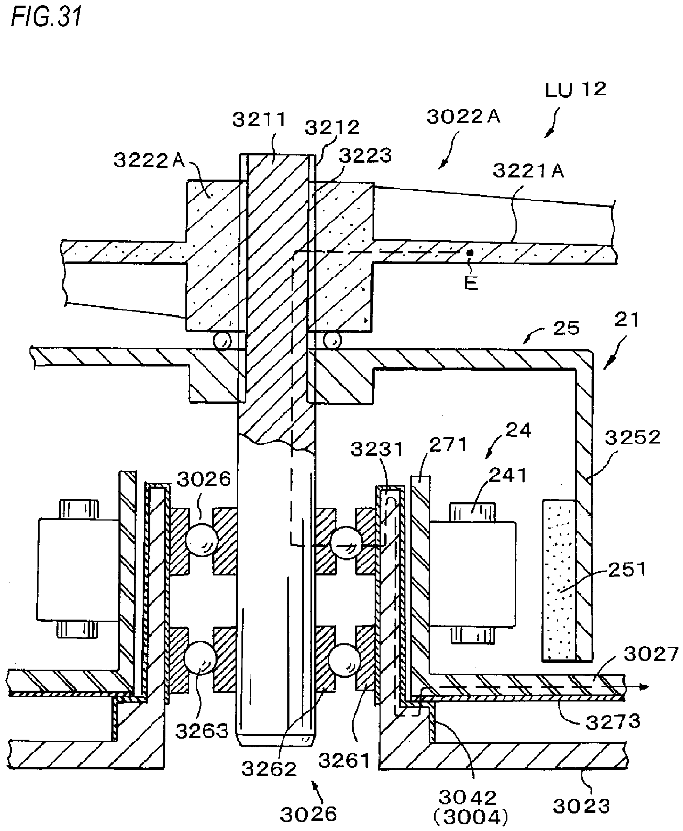

FIG. 31 is a partial sectional view of a twelfth embodiment. In the twelfth embodiment, the configurations, which are similar to the first or eleventh embodiment, are denoted with the same reference signs or the 3000s corresponding signs and the overlapping descriptions thereof are omitted.

In the twelfth embodiment, a blade 3221A and a boss 3222A, which are a rotary reflector 3022A, are formed of a conductive material such as metal. In the meantime, even when the rotary reflector 3022A is formed of metal, aluminum or the like is preferably vapor-deposited or plated on a surface of the blade 3221A so as to form the light reflecting surface. Also, when aluminum is used as the metal, the light reflecting surface can be configured by mirror-finishing a surface of the blade 3221A.

Alternatively, the rotary reflector 3022A may be formed of conductive resin. For example, resin mixed with a conductive material such as carbon black may be used. In this case, as with the eleventh embodiment, aluminum for configuring the light reflecting surface is vapor-deposited or plated on the surface of the blade 3221A. Like this, in the twelfth embodiment, since the rotary reflector 3022A has conductivity, the rotary reflector 3022A, i.e., the blade 3221A and the boss 3222A configure a first conductive part.

According to the twelfth embodiment, when the rotary shaft 3211 is fitted into the mounting hole 3223 of the boss 3222A of the rotary reflector 3022A, both are electrically contacted and conductive to each other because they are all the conductive members. Therefore, it is possible to rapidly discharge the static electricity E, which is generated when the rotary reflector 3022A is driven, from the boss 3222A to the rotary shaft 3211 without electrifying the blade 3221A and the boss 3222A with the static electricity.

The configuration of the motor 21 of the twelfth embodiment is the same as the eleventh embodiment, and the second conductive film 3042 is formed on the inner surface of the casing 3023, particularly from the inner peripheral surface to the outer peripheral surface of the bearing tube 3231 and further over the region in which the circuit board 3027 is disposed. Also, the configuration in which the rotary shaft 3211 is supported by the conductive ball bearings 3026 disposed in the bearing tube 3231 and the configuration in which the circuit board 3027 is disposed in contact with the second conductive film 3042 in the casing 3023 are also the same as the eleventh embodiment.

Therefore, as with the eleventh embodiment, the static electricity E discharged to the rotary shaft 3211 can be discharged from the ball bearings 3026 to the second conductive film 3042 and can also be discharged to the ground via the ground wiring 3273 of the circuit board 3027 conductive to the second conductive film. Thereby, it is possible to prevent the damage of the light reflecting surface of the rotary reflector 3022A.

### (First Modified Embodiment of Twelfth Embodiment)

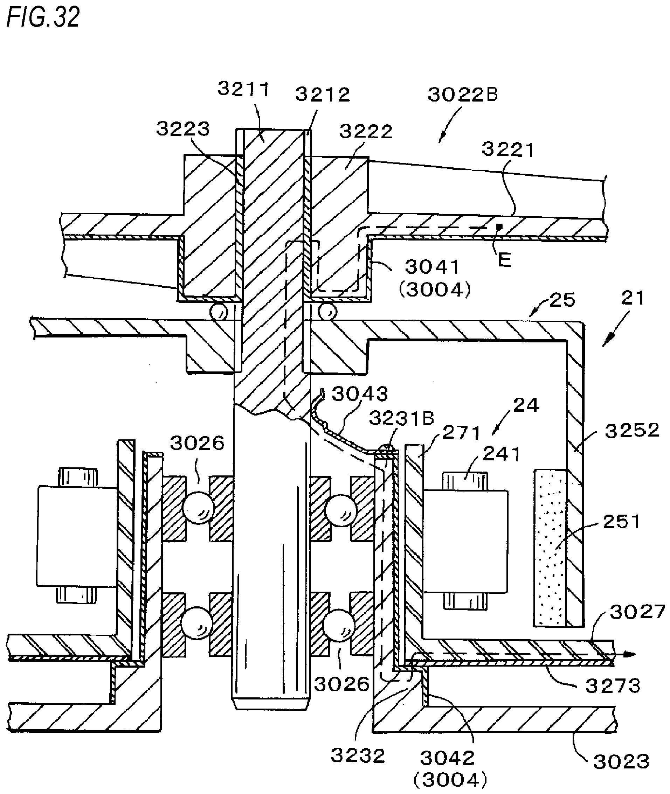

In the eleventh and twelfth embodiments, the ball bearing 3026 is used so as to discharge the static electricity from the rotary shaft 3211 to the second conductive film 3042. However, the present disclosure is not limited thereto. For example, as shown in FIG. 32, a conductive brush 3043 electrically connected to the second conductive film 3042 may be disposed on a part of the bearing tube 3231B, and the conductive brush 3043 may be made to be in contact with the outer peripheral surface of the rotary shaft 3211. The conductive brush 3043 may be fixed to the bearing tube 3231B by soldering the same to the second conductive film 3042 or screwing the same to the second conductive film 3042.

In this case, the static electricity E discharged to the rotary shaft 3211 can be discharged to the second conductive film 3042 via the conductive brush 3043 and finally discharged to the ground. This configuration is effective when the ball bearing 3026 is not configured by the conductive member. Also, it is not necessary to form the second conductive film 3042 on the inner peripheral surface of the bearing tube 3231B, so that it is possible to simplify the manufacturing process.

In the present disclosure, in a case in which the rotary shaft 3211 of the motor 21 is directly grounded, for example, when the rotary shaft is bearing-supported with being in direct contact with the conductive casing, the second conductive film 3042 may be omitted. That is, the configuration of the present disclosure can be realized only by the first conductive film 3041, inasmuch as the static electricity generated in the rotary reflector 3022, 3022A, 3022B can be discharged to the rotary shaft 3211 by the first conductive film 3041 and then discharged from the rotary shaft 3211 to the ground.

The present disclosure is not limited to the lamp unit with the brushless motor described in the above embodiments. That is, a motor in which the rotary shaft can be grounded can be adopted as the motor for driving the rotary reflector of the present invention.

The rotary reflector of the present disclosure is not limited to the above configuration described in each of the embodiments, and may have a different configuration with respect to the shape, the number and the like of the blades. For example, the blade may be one or three or more. Also, the configuration of the motor configured to drive the rotary reflector is not limited to the above configuration described in each of the embodiments, and the numbers of the coils and magnets and the phase signals for driving may also be different. Also, a configuration in which the blade, the casing and the yoke are disposed in corresponding order from one end portion of the rotary shaft is also possible. Likewise, the shapes of the light source and projector lens configuring the lamp unit may be different.

The subject application is based on Japanese Patent Application Nos. 2017-120058 filed on June 20, 2017, 2017-120059 filed on June 20, 2017, 2017-130760 filed on July 4, 2017, and 2017-140428 filed on July 20, 2017, the contents of which are incorporated herein by reference.

## Claims

1. A lamp unit comprising:
a rotary reflector configured to reflect and scan light emitted from a light source in a predetermined direction while rotating, and
a motor configured to rotate the rotary reflector,
wherein the rotary reflector and a rotor of the motor are integrally formed.

2. The lamp unit according to Claim 1, wherein the rotor comprises a rotor yoke, and
wherein the rotor yoke is formed integrally with the rotary reflector.

3. The lamp unit according to Claim 2, wherein the rotary reflector and the rotor yoke are formed by integral molding.

4. The lamp unit according to Claim 2 or 3, wherein the motor is an outer rotor-type brushless motor.

5. The lamp unit according to any one of Claims 1 to 4, wherein the rotary reflector comprises at least one light reflecting blade, and
wherein the light reflecting blade is formed integrally with the rotor.

6. The lamp unit according to any one of Claims 2 to 5, wherein a rotary shaft of the motor is formed integrally with the rotary reflector and the rotor yoke.

7. A lamp unit comprising:
a rotary reflector configured to reflect and scan light emitted from a light source in a predetermined direction while rotating,
wherein a motor configured to rotate the rotary reflector comprises a stator, a rotor mounted to a rotary shaft, and a pair of bearings spaced apart in an axial direction of the rotary shaft and configured to support the rotary shaft so as to be axially rotatable,
wherein the rotary reflector and the rotor are mounted to one end portion of the rotary shaft, and
wherein a center-of-gravity of the rotary shaft is set between the pair of bearings in an axial direction.

8. The lamp unit according to Claim 7, wherein the rotary reflector comprises at least one light reflecting blade, and
wherein a light reflecting surface of the light reflecting blade is configured so that a facing angle to the light source changes along a rotating direction.

9. The lamp unit according to Claim 7 or 8, wherein a balance weight is mounted to the other end portion of the rotary shaft.

10. The lamp unit according to Claim 7 or 8, wherein an extension length of the other end portion of the rotary shaft from the bearing disposed on the other end portion-side of the rotary shaft is longer than an extension length of one end portion of the rotary shaft from the bearing disposed on one end portion-side of the rotary shaft.

11. The lamp unit according to Claim 7 or 8, wherein the bearing, which is disposed on one end portion-side of the rotary shaft, of the pair of bearings is disposed closer to one end portion of the rotary shaft than the stator.

12. The lamp unit according to Claim 9, wherein the balance weight is configured as a heat radiation fan.

13. The lamp unit according to Claim 12, wherein the light source is mounted to a heat sink, and
wherein the heat radiation fan is configured to blow an air stream, which is to be generated as a result of drive, toward the heat sink.

14. A lamp unit comprising:
a rotary reflector configured to reflect and scan light emitted from a light source in a predetermined direction while rotating,
wherein the rotary reflector is provided with a weight balance adjusting means for adjusting weight balance.

15. The lamp unit according to Claim 14, wherein the rotary reflector comprises a boss to be mounted to a rotary shaft of a motor and at least one light reflecting blade provided integrally with the boss, and
wherein the weight balance adjusting means is provided to the boss or the light reflecting blade.

16. The lamp unit according to Claim 15, wherein the weight balance adjusting means is an asymmetrically shaped ring member to be mounted to the boss.

17. The lamp unit according to Claim 15, wherein the weight balance adjusting means is a concave portion provided to the light reflecting blade, and
wherein the concave portion is configured so that a weight member such as resin can be injected therein.

18. The lamp unit according to Claim 15, wherein the weight balance adjusting means is a convex portion provided to the light reflecting blade and capable of being appropriately removed.

19. The lamp unit according to Claim 15, wherein the weight balance adjusting means is a convex piece provided to the light reflecting blade and capable of being bent in a radial direction of the rotary reflector.

20. A lamp unit comprising:
a rotary reflector configured to reflect and scan light emitted from a light source in a predetermined direction while rotating,
wherein the rotary reflector is mounted to a rotary shaft of a motor formed of a conductive member,
wherein the rotary reflector is provided with a first conductive part, and
wherein the first conductive part is grounded via the rotary shaft.

21. The lamp unit according to Claim 20, wherein the rotary reflector has a surface configured as a light reflecting surface, and is formed on its backside with the first conductive part.

22. A lamp unit comprising:
a rotary reflector configured to reflect and scan light emitted from a light source in a predetermined direction while rotating,
wherein the rotary reflector is mounted to a rotary shaft of a motor formed of a conductive member, and
wherein the rotary reflector is formed of a conductive member and is grounded via the rotary shaft.

23. The lamp unit according to any one of Claims 20 to 22, wherein the motor has a second grounded conductive part, and
wherein the rotary shaft of the motor is conductive to the second conductive part.

24. The lamp unit according to Claim 23, wherein the second conductive part is configured as a conductive film formed on a surface of a casing of the motor.

25. The lamp unit according to Claim 24, wherein the motor has a circuit board provided in the casing, and
wherein the second conductive part is conductive to a ground wiring provided on the circuit board.

26. The lamp unit according to Claim 25, wherein the rotary shaft of the motor is supported to the casing via a bearing and is conductive to the second conductive part via the bearing.
